(19) Europäisches Patentamt
European Patent Office
Office européen des brevets

(11) EP 4 641 589 A1

(12) **EUROPEAN PATENT APPLICATION**
published in accordance with Art. 153(4) EPC

(43) Date of publication:
**29.10.2025 Bulletin 2025/44**

(21) Application number: **23907137.6**

(22) Date of filing: **21.12.2023**

(51) International Patent Classification (IPC):
***H01B 1/06** (2006.01)* ***H01M 4/62** (2006.01)*
***H01M 10/052** (2010.01)* ***H01M 10/0565** (2010.01)*

(52) Cooperative Patent Classification (CPC):
**H01B 1/06; H01M 4/62; H01M 10/052; H01M 10/0565;** Y02E 60/10

(86) International application number:
**PCT/JP2023/045932**

(87) International publication number:
**WO 2024/135777 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 JP 2022207165**

(71) Applicant: **Canon Kabushiki Kaisha**
**Ohta-ku**
**Tokyo 146-8501 (JP)**

(72) Inventors:
- **KOMATSU, Hiroaki**
  **Tokyo 146-8501 (JP)**
- **YAMADA, Masaki**
  **Tokyo 146-8501 (JP)**
- **ARIMURA, Hideya**
  **Tokyo 146-8501 (JP)**
- **MATSUNAGA, Kenta**
  **Tokyo 146-8501 (JP)**
- **YAMANE, Souya**
  **Tokyo 146-8501 (JP)**

(74) Representative: **TBK**
**Bavariaring 4-6**
**80336 München (DE)**

(54) **POLYMER ELECTROLYTE AND SECONDARY BATTERY**

(57) Provided is a polymer electrolyte that is not susceptible to any decrease in strength even in a high temperature range and has high ion conductivity at room temperature and lower temperatures even without relying on a liquid electrolyte. This polymer electrolyte contains a polymer that has a specific polyether structure having a free end, a crosslinked structure produced using a specific polyether, and a specific ammonium cationic group, the polymer electrolyte furthermore containing a lithium salt, and the volume swelling ratio of the polymer electrolyte being 40-120% as determined by a methyl ethyl ketone immersion method.

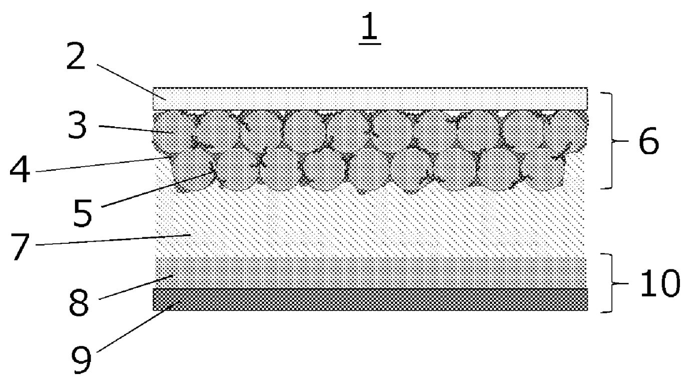


Fig. 1



Processed by Luminess, 75001 PARIS (FR)

## Description

TECHNICAL FIELD

The present disclosure relates to a polymer electrolyte and a secondary battery.

BACKGROUND ART

In recent years, with the development of portable devices, such as tablet terminals and smartphones, and electric vehicles, the demand for secondary batteries as power sources therefor has increased. In general, the secondary batteries are each composed of electrodes (positive and negative electrodes) and an electrolyte, and charging and discharging are performed by the movement of ions between the electrodes through the electrolyte. Such secondary batteries are used in a wide range of applications, from small devices such as mobile phones to large devices such as electric vehicles. Therefore, high safety and further improvement of performance are required.
For further improvement in the safety of secondary battery, development of solid-state secondary batteries, in which the conventional flammable electrolytic solution is replaced with a solid electrolyte, is underway. Sulfide-based, oxide-based, and polymer-based materials are widely investigated as solid electrolytes.
In order to improve the charge and discharge characteristics of secondary batteries, it is generally important to increase an interface between active materials in the electrodes and the electrolyte. Here, active materials are substances involved in reactions that generate electricity. While sulfide-based and oxide-based solid electrolytes have excellent ionic conductivity, it is difficult to enlarge the interface with the active materials, and impact resistance may not be sufficient, so it has been proposed to use a gel electrolyte in which an electrolytic solution is combined with a polymer.
PTL 1 describes a gel electrolyte that contains a polyether and an ionic liquid. PTL 2 describes a gel electrolyte that has improved affinity with an electrolytic solution as a result of incorporating a quaternary ammonium base into the main chain. Furthermore, PTL 3 discloses a polymer electrolyte containing a linear polymer and an ionic liquid..

CITATION LIST

PATENT LITERATURE

[PTL 1] JP-A-2017-090677
[PTL 2] WO 2004/027789
[PTL 3] JP-A-2007-280912

SUMMARY OF INVENTION

TECHNICAL PROBLEM

In recent years, there is a demand for lithium ion secondary batteries having higher charge/discharge characteristics in addition to high safety. When a polymer gel such as in PTL 1 and PTL 2 is used as an electrolyte, or when a polymer electrolyte using a linear polymer as in PTL 3 is used, it is considered that the strength at high temperatures is insufficient and that strong impacts cause a short circuit. Meanwhile, where a liquid electrolyte is removed to prevent a short circuit, the ionic conductivity may decrease.
At least one aspect of the present disclosure is directed to providing a polymer electrolyte having high ionic conductivity. In addition, at least one aspect of the present disclosure is directed to providing a secondary battery that exhibits excellent strength even in a high-temperature environment and has excellent battery performance.

SOLUTION TO PROBLEM

At least one aspect of the present disclosure provides a polymer electrolyte,

the polymer electrolyte, comprising a polymer having:

a structure represented by a formula (1) below;
at least one structure selected from the group consisting of a structure represented by a formula (2) below and a structure represented by a formula (3) below; and

a structure represented by a formula (4) below,

the polymer electrolyte further comprising a lithium salt, and

the polymer electrolyte having a volume swelling ratio of 40% to 120%, as measured by a methyl ethyl ketone immersion method:

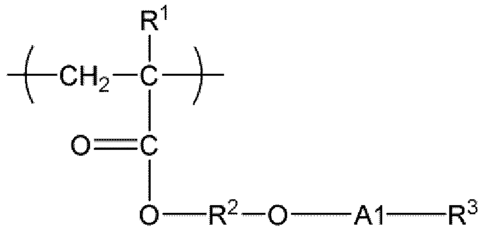

(1)

(2)

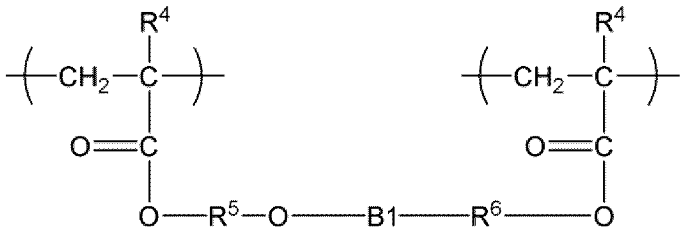

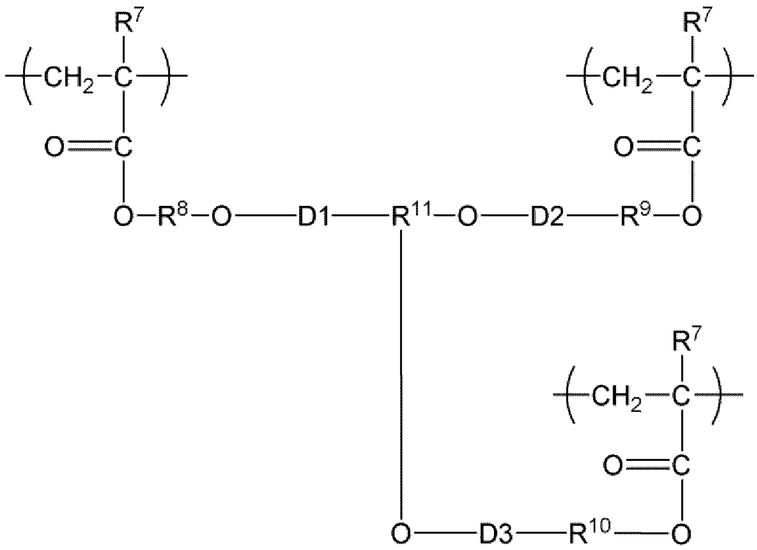

(3)

(In formula (1), $R^1$ represents a hydrogen atom or a methyl group. $R^2$ represents a linear or branched alkylene group having 1 to 6 carbon atoms. $R^3$ represents an alkyl group having 1 to 6 carbon atoms.

In formula (2), $R^4$ each independently represents a hydrogen atom or a methyl group. $R^5$ and $R^6$ each independently represents a linear or branched alkylene group having 1 to 6 carbon atoms.

In formula (3), $R^7$ each independently represents a hydrogen atom or a methyl group. $R^8$, $R^9$, and $R^{10}$ each independently represents a linear or branched alkylene group having 1 to 6 carbon atoms. $R^{11}$ represents a trivalent organic group having 1 to 6 carbon atoms.

A1, B1, D1, D2 and D3 in formulas (1) to (3) are each independently a linking group having at least an ethylene oxide structure represented by ($-CH_2CH_2-O-$)).

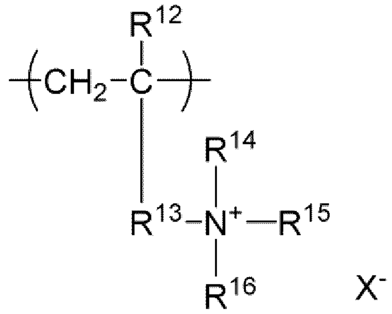

(4)

(In formula (4), $R^{12}$ represents a hydrogen atom or a methyl group. $R^{13}$ represents a divalent linking group. $R^{14}$, $R^{15}$, and $R^{16}$ each independently represents an alkyl group having 1 to 8 carbon atoms. $X^-$ represents an anion.).

Furthermore, at least one aspect of the present disclosure provides a secondary battery comprising a positive electrode, a bulk electrolyte, and a negative electrode, wherein
at least one selected from the group consisting of the positive electrode, the bulk electrolyte, and the negative electrode includes the above-mentioned polymer electrolyte.

ADVANTAGEOUS EFFECTS OF INVENTION

According to at least one aspect of the present disclosure, it is possible to obtain a polymer electrolyte having high ionic conductivity. In addition, according to at least one aspect of the present disclosure, it is possible to obtain a secondary battery that exhibits excellent strength even in a high-temperature environment and has excellent battery performance.

BRIEF DESCRIPTION OF DRAWINGS

Fig. 1 is a schematic cross-sectional view of a secondary battery using the polymer electrolyte of the present disclosure as a bulk electrolyte.
Fig. 2 is a schematic cross-sectional view of a secondary battery using the polymer electrolyte of the present disclosure as a positive electrode active material binder.
Fig. 3 is a schematic cross-sectional view of a secondary battery using the polymer electrolyte of the present disclosure as a positive electrode active material binder, bulk electrolyte, and negative electrode active material binder.

DESCRIPTION OF EMBODIMENTS

In the present disclosure, the wording of "from XX to YY" or "XX to YY" that represents a numerical range means a numerical range including the lower limit and upper limit that are the endpoints, unless otherwise specified. In addition, when a numerical range is described in stages, the upper and lower limits of each numerical range can be freely combined. Furthermore, in the present disclosure, for example, the wording such as "at least one selected from the group consisting of XX, YY, and ZZ" means any of XX, YY, ZZ, a combination of XX and YY, a combination of XX and ZZ, a combination of YY and ZZ, and a combination of XX, YY, and ZZ.

The present inventors have conducted intensive studies to achieve the above object. First, the present inventors have found that it is possible to increase ionic conductivity by using a polyether acrylic resin that has a special three-dimensional crosslinking form in a dry polymer system in which lithium ion movement cannot be expected to be advanced by a liquid electrolyte.

As a result of further studies, the present inventors have found that high ionic conductivity is maintained even at low temperatures only when an anion and a cationic group having a nitrogen-containing heterocyclic structure are contained in the molecule, and this finding allowed the inventors to arrive at the above-mentioned polymer electrolyte. In other words, the polymer electrolyte of the present disclosure satisfies the following conditions.

- The three-dimensional crosslinked structure of the polymer has many terminal-free chains that are not bonded to the polymer chain at one terminal, and has a very low crosslink density.
- The three-dimensional crosslinked structure of the polymer has an anion, and a cationic group having a nitrogen-containing aromatic structure.

The inventors speculate as follows about the reason why the polymer electrolyte according to the present disclosure demonstrates the unexpected effect of having high ionic conductivity without relying on a liquid electrolyte. In a dry polymer system in which stabilization of lithium ions by a liquid electrolyte is not expected, lithium ions move between polymer chains that undergo molecular motion. Therefore, a polymer system that has been three-dimensionally crosslinked to suppress the risk of short circuits due to film deformation at high temperatures is more susceptible to steric hindrance than a liquid system.

The polymer used in the present disclosure has a three-dimensional crosslinked structure (structure of formulas (2) and (3)) and is less likely to deform even at high temperatures. Meanwhile, the structure has many terminal-free chains (structure of formula (1)) in which the terminal at one end is not bonded to another polymer chain. This is apparently why the polymer does not form a dense mesh structure and is unlikely to hinder the movement of lithium ions while maintaining strength.

Furthermore, the ammonium cation structure bonded in the polymer structure and anion (structures of formula (4)) reduce the difference in polarity between the lithium salt, which is the supporting electrolyte contained, and the polymer, cause no precipitation of the lithium salt, and increase the amount thereof that can be dissolved.

Furthermore, it is believed that the ammonium cation structure bonded in the above-mentioned polymer structure suppresses the three-dimensional regularity and reduces the crystallinity of the polymer, and therefore suppresses the decrease in ion conductivity at low temperatures.

The fact that the three-dimensional crosslinked structure of the polymer has many terminal-free chains that are not bonded to the polymer chain at one terminal and has a very low crosslink density is clearly expressed as the volume swelling ratio of the polymer electrolyte determined by a methyl ethyl ketone immersion method. Specifically, the volume swelling ratio of the polymer electrolyte determined using methyl ethyl ketone (MEK) is 40% to 120%.

The volume swelling ratio represents the ratio of the volumes of a three-dimensional crosslinked polymer before and after it is immersed in a specific solvent and swelling caused by the solvent becomes saturated. The volume swelling ratio is calculated using the following formula where the volume of the test specimen is calculated from the weight in air and the weight in water. The specific measurement means is described hereinbelow.

Volume swelling ratio (%) = (volume after immersion in solvent and saturation of swelling) / (volume before immersion in solvent) $\times$ 100

The volume swelling ratio of the polymer electrolyte of less than 40% is believed to indicate that there are few terminal-free chains (the structure of formula (1)) and many three-dimensional crosslinked structures. As a result, the ionic conductivity is likely to be low, and rate characteristics of the secondary battery are also likely to be degraded. Meanwhile, the volume swelling ratio of the polymer electrolyte of more than 120% indicates a lack of three-dimensional crosslinked structures, which is likely to result in a decrease in strength, such as a decrease in impact resistance at high temperatures.

The volume swelling ratio of the polymer electrolyte is preferably 60% to 110%, and more preferably 70% to 105%.

Preferred embodiments of the present disclosure are described hereinbelow in detail with reference to the drawings. The components, materials, shapes, and relative positions thereof described in these embodiments do not limit the scope of the present disclosure.

(1) Embodiments of secondary battery

A secondary battery comprises a positive electrode, a bulk electrolyte, and a negative electrode, and at least one of the positive electrode, the bulk electrolyte, and the negative electrode contains the polymer electrolyte of the present disclosure. For example, the bulk electrolyte is a polymer electrolyte.

An example of a secondary battery using the polymer electrolyte of the present disclosure is shown in Figs. 1 to 3. A secondary battery 1 shown in Fig. 1 represents an example of a schematic configuration of a secondary battery using a polymer electrolyte as a bulk electrolyte 7. A positive electrode active material 3 provided on a positive electrode current collector 2 is fixed by a positive electrode active material binder 4 to form a positive electrode 6. The positive electrode 6 may contain a conductive auxiliary material 5.

A negative electrode active material 8 provided on a negative electrode current collector 9 forms a negative electrode 10. In Fig. 1, the negative electrode active material represents metallic lithium, indium, etc. The bulk electrolyte 7 is provided between the positive electrode 6 and the negative electrode 10.

The secondary battery 1 shown in Fig. 2 represents an example of a schematic configuration of a secondary battery using a polymer electrolyte as the positive electrode active material binder 4. In the embodiment shown in Fig. 2, the positive electrode 6 contains the polymer electrolyte. For example, the positive electrode 6 has the positive electrode active material 3 and the positive electrode active material binder 4 that fixes the positive electrode active material, and the

positive electrode active material binder 4 is the polymer electrolyte of the present disclosure. In the configuration shown in Fig. 2, the bulk electrolyte 7 represents an oxide-based or sulfide-based inorganic solid electrolyte. The other features are the same as those in Fig. 1.

The secondary battery 1 shown in Fig. 3 represents an example of a schematic configuration of a secondary battery using a polymer electrolyte as the positive electrode active material binder 4, the bulk electrolyte 7, and the negative electrode active material binder 11. In the embodiment shown in Fig. 3, the positive electrode, bulk electrolyte, and negative electrode contain a polymer electrolyte. That is, the positive electrode 6 has the positive electrode active material 3 and the positive electrode active material binder 4 that fixes the positive electrode active material, and the positive electrode active material binder 4 is the polymer electrolyte of the present disclosure. Also, the bulk electrolyte 7 is the polymer electrolyte of the present disclosure. In addition, the negative electrode 10 has the negative electrode active material 8 and the negative electrode active material binder 11 that fixes the negative electrode active material 8, and the negative electrode active material binder 11 is the polymer electrolyte of the present disclosure. In the configuration shown in Fig. 3, the negative electrode active material 8 represents a carbon material such as graphite. The other features are the same as those in Fig. 1.

In order to more effectively achieve the effects of the present disclosure, it is preferable that the bulk electrolyte 7 be a polymer electrolyte, which penetrates the positive electrode active material 3 and the negative electrode active material 8 and increases the contact area, as shown in Figs. 1 and 3.

(Method for manufacturing solid-state secondary battery)

A solid-state secondary battery can be manufactured by a known cell manufacturing method such as a laminate cell type, a coin cell type, or a pressurized cell type. The laminate cell type will be described below as an example.

A laminate is obtained in which a positive electrode, a bulk electrolyte, and a negative electrode are arranged between a positive electrode current collector and a negative electrode current collector. Electrode tabs are welded to the positive electrode and negative electrode current collectors. The laminate, in which the positive electrode current collector, positive electrode, bulk electrolyte, negative electrode, and negative electrode current collector are stacked in this order, is wrapped in an aluminum laminate film and sealed while reducing the pressure by using a vacuum packaging machine. The ends of the electrode tabs are exposed outside the laminate film, and the tabs and the aluminum laminate film are sealed in a state where they are bonded by thermocompression. After sealing, if necessary, pressure may be applied using an isostatic pressure device or the like. The bulk electrolyte may be a solid electrolyte or a polymer electrolyte, but both may be used in the laminate. In addition to the above-mentioned laminate, other layers such as elastic materials and resin materials may be stacked inside the aluminum laminate film for the purpose of improving strength and molding. A bipolar type in which multiple laminates are stacked may also be used.

(Positive electrode current collector)

Examples of the positive electrode current collector include metal foils. Examples of metals include aluminum, stainless steel, copper, silver, gold, platinum, nickel, and palladium. Metals may be used alone or in combination of two or more.

(Positive electrode active material)

The positive electrode active material may be selected, for example, from those commonly used in secondary batteries such as lithium ion secondary batteries. Examples thereof include $(CF)_m$, $(C_2F)_m$, $MnO_2$, $TiS_2$, $MoS_2$, $FeS_2$, $Li_{xA}CoO_2$, $Li_{xA}NiO_2$, $Li_{xA}MnO_2$, $Li_{xA}Co_yNi_{1-y}O_2$, $Li_{xA}Co_yM_{1-y}O_z$, $Li_{xA}Ni_{1-y}M_yO_z$, $Li_{xB}Mn_2O_4$, $Li_{xB}Mn_{2-y}M_yO_4$ (in each of the above formulas, M is at least one selected from the group consisting of Na, Mg, Sc, Y, Mn, Fe, Co, Ni, Cu, Zn, Al, Cr, Pb, Sb and B. xA = 0-1.2, xB = 0-2.0, y = 0-0.9, z = 2.0-2.3), vanadium oxide and lithium compounds thereof, niobium oxide and lithium compounds thereof, conjugated polymers using organic conductive materials, olivine compounds, etc.

The xA and xB values in the above composition formulas are values before the start of charging and discharging, and increase or decrease with charging and discharging. The positive electrode active materials can be used alone or in combination of two or more types.

(Conductive auxiliary material)

The conductive auxiliary material may be selected, for example, from those commonly used in secondary batteries such as lithium ion secondary batteries. Examples thereof include graphite such as natural graphite and artificial graphite, carbon black such as acetylene black, Ketjen black, channel black, furnace black, lamp black, and thermal black, conductive fibers such as carbon fibers and metal fibers, metal powders such as aluminum powder, conductive whiskers

such as zinc oxide whiskers and potassium titanate whiskers, conductive metal oxides such as titanium oxide, and organic conductive materials such as phenylene derivatives. The conductive auxiliary material can be used alone or in combination of two or more types.

(Active material binder)

The active material binder may be selected, for example, from those commonly used in secondary batteries such as lithium ion secondary batteries. Examples thereof include polyvinylidene fluoride (PVDF), polytetrafluoroethylene, polyethylene, polypropylene, aramid resins, polyamides, polyimides, polyamideimides, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyethers, polyethersulfones, hexafluoropolypropylene, styrene butadiene rubber, and carboxymethyl cellulose.

The polymer electrolyte of the present disclosure may be used as a bulk electrolyte, may be used as a positive electrode active material binder, may be used as a negative electrode active material binder, or may be used as a bulk electrolyte, a positive electrode active material binder, and a negative electrode active material binder.

In other words, it is preferable that the secondary battery satisfy at least one of the following (i) to (iii).

(i) The positive electrode 6 has the positive electrode active material 3 and the positive electrode active material binder 4 that fixes the positive electrode active material, the positive electrode active material binder 4 being the polymer electrolyte of the present disclosure.
(ii) The bulk electrolyte 7 is the polymer electrolyte of the present disclosure.
(iii) The negative electrode 10 has the negative electrode active material 8 and the negative electrode active material binder 11 that fixes the negative electrode active material 8, the negative electrode active material binder 11 being the polymer electrolyte of the present disclosure.

It is particularly preferable that the polymer electrolyte of the present disclosure be used as the positive electrode active material binder because in this case lithium ions can easily reach from the surface to the depths of the positive electrode 6. The active material binders may be used alone or in combination of two or more types.

The positive electrode 6 can be fabricated, for example, by pressure-bonding a positive electrode mixture to the surface of the positive electrode current collector 2, or by coating a positive electrode mixture slurry, drying, and further rolling as necessary to form the positive electrode 6. It can also be prepared by kneading the positive electrode active material, the conductive auxiliary material, and the positive electrode active material binder. The positive electrode mixture slurry can also be prepared, for example, by dissolving or dispersing the positive electrode active material, the conductive auxiliary material, and the active material binder in a medium such as dehydrated N-methyl-2-pyrrolidone, acetonitrile, methyl ethyl ketone, or ethylene glycol ethers.

(Negative electrode current collector)

Examples of the negative electrode current collector include metal foils. Examples of metals include aluminum, stainless steel, copper, silver, gold, platinum, nickel, and palladium. The metals may be used alone or in combination of two or more types.

(Negative electrode active material)

Examples of the negative electrode active material include metals, metal fibers, carbon materials, oxides, nitrides, silicon, silicon compounds, tin, tin compounds, and various alloy materials. Among these, metals, oxides, carbon materials, silicon, silicon compounds, tin, and tin compounds are preferred from the viewpoint of capacity density.

Examples of metals include metallic Li and In-Li, and examples of the oxide include $Li_4Ti_5O_{12}$ (LTO: lithium titanate). Examples of carbon materials include various types of natural graphite, coke, carbon in the process of being graphitized, carbon fibers, spherical carbon, various types of artificial graphite, and amorphous carbon. Examples of silicon compounds include silicon-containing alloys, silicon-containing inorganic compounds, silicon-containing organic compounds, and solid solutions. Examples of tin compounds include $SnO_B$ ($0 < B < 2$), $SnO_2$, $SnSiO_3$, $Ni_2Sn_4$, and $Mg_2Sn$.

The negative electrode material may also contain a conductive auxiliary material. Examples of the conductive auxiliary material include graphite, such as natural graphite and artificial graphite, and carbon black, such as acetylene black, Ketjen black, channel black, furnace black, lamp black, and thermal black. When a polymer electrolyte is used as the bulk electrolyte, graphite is particularly suitable for use as the negative electrode active material.

Examples of the conductive auxiliary material include conductive fibers, such as carbon fibers, carbon nanotubes, and metal fibers, metal powders such as carbon fluoride, aluminum powder, conductive whiskers, such as zinc

oxide, conductive metal oxides, such as titanium oxide, and organic conductive materials, such as phenylene dielectrics.

(Solid electrolyte)

In secondary batteries, a solid electrolyte is disposed, as a lithium ion migration layer, between a positive electrode and a negative electrode, and may be used as a bulk electrolyte that also functions as a separator. It can also be used as an auxiliary agent to enhance the conductivity of lithium ions by mixing with the active material layers of the positive and negative electrodes.

The polymer electrolyte of the present disclosure can be suitably used as both the bulk electrolyte and the auxiliary material. This allows the contact interface between the bulk electrolyte and the positive and negative electrode active materials to be enlarged, and it also has the flexibility to follow the expansion and contraction of the positive and negative electrode active materials, thereby improving the characteristics of the secondary battery.

For the bulk electrolyte and auxiliary material, solid electrolytes other than polymer electrolytes may be used. Examples of solid electrolytes other than polymer electrolytes include oxide-based solid electrolytes, sulfide-based solid electrolytes, and complex hydride-based solid electrolytes.

Examples of oxide-based solid electrolytes include NASICON-type compounds such as $Li_{1.5}Al_{0.5}Ge_{1.5}(PO_4)_3$ and $Li_{1.3}Al_{0.3}Ti_{1.7}(PO_4)_3$, and garnet-type compounds such as $Li_{6.25}LA_3ZR_2Al_{0.25}O_{12}$. Examples of oxide-based solid electrolytes include perovskite-type compounds such as $Li_{0.33}Li_{0.55}TiO_3$. Examples of oxide-based solid electrolytes also include LISICON-type compounds such as $Li_{14}Zn(GeO_4)_4$, and acid compounds such as $Li_3PO_4$, $Li_4SiO_4$, and $Li_3BO_3$. Specific examples of sulfide-based solid electrolytes include $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, $Li_2S$-$P_2S_5$, etc.

The solid electrolyte may be crystalline or amorphous, or may be glass ceramics. The notation $Li_2S$-$P_2S_5$ etc. refers to a sulfide-based solid electrolyte made using raw materials containing $Li_2S$ and $P_2S_5$.

The polymer electrolyte of the present disclosure can be used as a bulk electrolyte, a positive electrode active material binder, or a negative electrode active material binder. The configuration of the polymer electrolyte according to one embodiment of the present disclosure will be described in detail below.

The polymer electrolyte of the present disclosure is preferably a solid electrolyte or a semi-solid electrolyte, such as a dry polymer electrolyte or a gel electrolyte. In other words, a non-liquid electrolyte is preferable. A dry polymer electrolyte is more preferable. The polymer electrolyte preferably does not substantially contain a liquid component such as a liquid electrolyte.

<Polymer electrolyte>

The polymer electrolyte according to one embodiment of the present disclosure has a polymer having the following structure. The polymer is, for example, a vinyl polymer. The polymer electrolyte is, for example, a polyether acrylic resin having a three-dimensional crosslinked structure having the following structure.

- Structure represented by formula (1).
- At least one structure selected from the group consisting of the structure represented by formula (2) and the structure represented by formula (3).
- Structure represented by formula (4).

The polymer electrolyte has a structure represented by the following formula (1).

[C3]

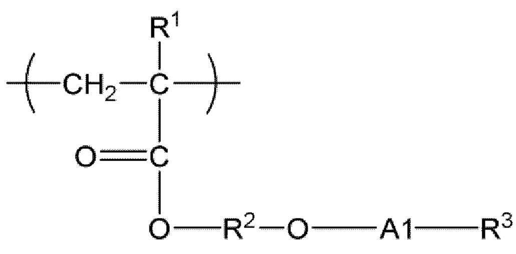

(1)

In formula (1), $R^1$ represents a hydrogen atom or a methyl group. $R^2$ represents a linear or branched alkylene group having 1 to 6 (preferably 1 to 4, more preferably 2 to 4) carbon atoms. $R^3$ represents an alkyl group having 1 to 6 (preferably 1 to 4, more preferably 1) carbon atoms.

In formula (1), A1 is a linking group having at least an ethylene oxide structure represented by ($-CH_2CH_2-O-$).

The structure represented by formula (1) is preferably a structure represented by the following formula (1-1).

[C4]

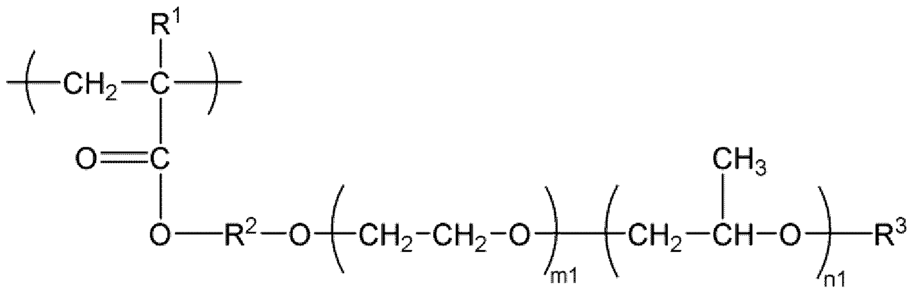

(1-1)

In formula (1-1), $R^1$ represents a hydrogen atom or a methyl group. $R^2$ represents a linear or branched alkylene group having 1 to 6 (preferably 1 to 4, more preferably 2 to 4) carbon atoms. $R^3$ represents an alkyl group having 1 to 6 (preferably 1 to 4, more preferably 1) carbon atoms. m1 and n1 are the average numbers of the added moles, m1 is an integer of 1 or more (preferably 1 to 110, more preferably 13 to 46), and n1 is an integer of 0 or more (preferably 5% to 25% of m1, more preferably 11% to 25% of m1).

The polymer electrolyte has at least one structure selected from the group consisting of the structure represented by the following formula (2) and the structure represented by the following formula (3). At least one structure selected from the group consisting of the structure represented by formula (2) and the structure represented by formula (3) may be the structure represented by formula (2). This structure can form a three-dimensional crosslinked structure.

[C5]

(2)

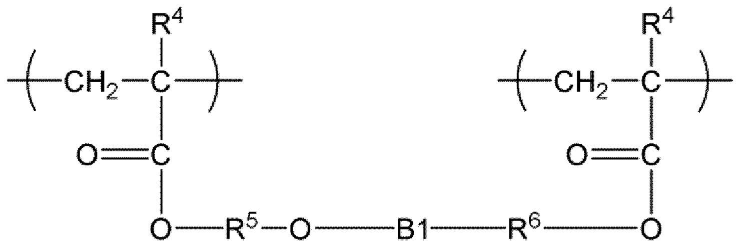

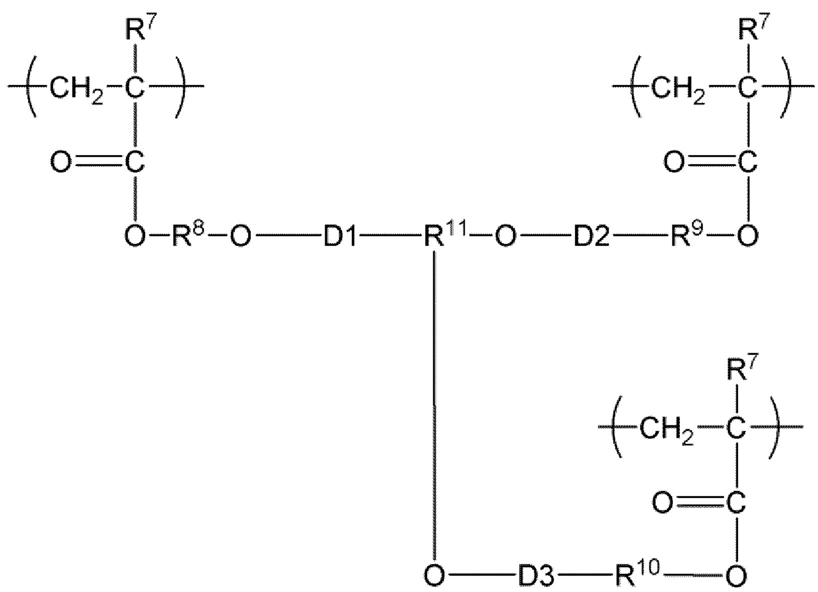

(3)

In formula (2), $R^4$ each independently represents a hydrogen atom or a methyl group. $R^5$ and $R^6$ each

independently represents a linear or branched alkylene group having 1 to 6 (preferably 1 to 4, more preferably 2 to 4) carbon atoms.

In formula (3), $R^7$ each independently represents a hydrogen atom or a methyl group. $R^8$, $R^9$, and $R^{10}$ each independently represents a linear or branched alkylene group having 1 to 6 (preferably 1 to 4, more preferably 2 to 4) carbon atoms. $R^{11}$ represents a trivalent organic group having 1 to 6 (preferably 1 to 3, more preferably 1) carbon atoms.

In formulas (2) and (3), B1, D1, D2, and D3 each independently represents a linking group having at least an ethylene oxide structure represented by ($-CH_2CH_2-O-$).

In formulas (1) to (3), it is preferable that A1, B1, D1, D2, and D3 each independently further has a propylene oxide structure represented by ($-CH_2CH(CH_3)-O-$). The arrangement of the ethylene oxide structure and the propylene oxide structure may be a block copolymer or a random copolymer. A random copolymer is preferable.

Furthermore, A1, B1, D1, D2, and D3 may each independently further include a diol structure having 1 to 6 (preferably 4 to 6) carbon atoms to the extent that the effect of the present disclosure is not impaired. The diol structure is represented by $-O-R^x-O-$, where $R^x$ is an alkylene group having 1 to 6 (preferably 4 to 6) carbon atoms.

The structure represented by formula (2) is preferably a structure represented by the following formula (2-1).

[C6]

(2-1)

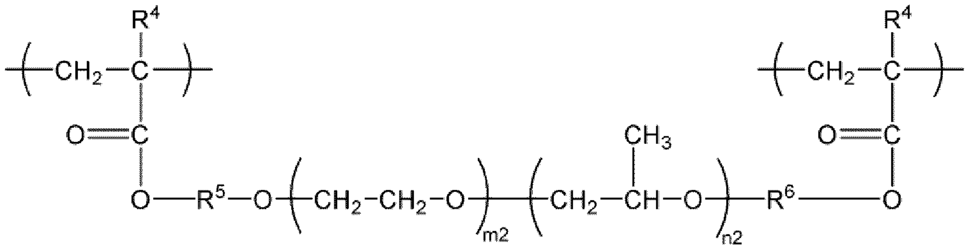

In formula (2-1), $R^4$ each independently represents a hydrogen atom or a methyl group. $R^5$ and $R^6$ each independently represents a linear or branched alkylene group having 1 to 6 carbon atoms (preferably 1 to 4, more preferably 2 to 4). m2 and n2 are the average numbers of the added moles, m2 is an integer of 1 or more (preferably 1 to 110, more preferably 13 to 46), and n2 is an integer of 0 or more (preferably 5% to 25% of m2, more preferably 11% to 25% of m2).

The chain sandwiched between the two -COO- may further contain a diol structure having 1 to 6 (preferably 4 to 6) carbon atoms to the extent that the effect of the present disclosure is not impaired. For example, a diol structure may be contained between ethylene oxide structures, between propylene oxide structures, or between an ethylene oxide structure and a propylene oxide structure. The diol structure is represented by $-O-R^x-O-$, where $R^x$ is an alkylene group having 1 to 6 (preferably 4 to 6) carbon atoms.

The structure represented by formula (3) is preferably a structure represented by the following formula (3-1).

[C7]

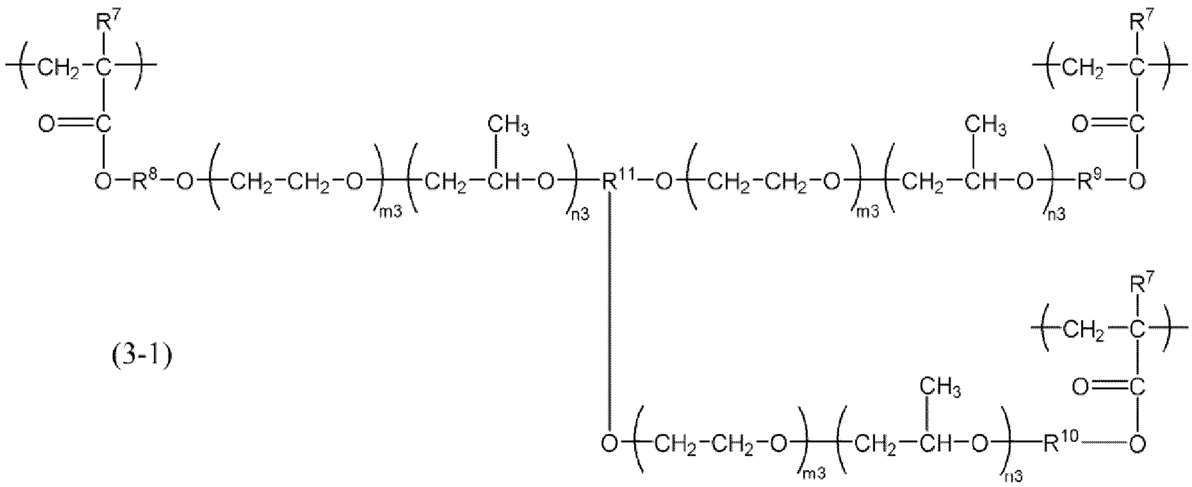

(3-1)

In formula (3-1), $R^7$ each independently represents a hydrogen atom or a methyl group. $R^8$, $R^9$, and $R^{10}$ each independently represents a linear or branched alkylene group having 1 to 6 (preferably 1 to 4, more preferably 2 to 4) carbon atoms. $R^{11}$ represents a trivalent organic group (preferably a hydrocarbon group) having 1 to 6 (preferably 1 to 3, more preferably 1) carbon atoms. m3 and n3 are the average numbers of the added moles, and m3 independently represents an integer of 1 or more (preferably 1 to 110, more preferably 13 to 46), and n3 independently represents an integer of 0 or more (preferably 5% to 25% of m3, more preferably 11% to 25% of m3).

The chain sandwiched between -COO- and $R^{11}$ may further contain a diol structure having 1 to 6 (preferably 4 to 6) carbon atoms to the extent that the effect of the present disclosure is not impaired. For example, a diol structure may be contained between ethylene oxide structures, between propylene oxide structures, or between an ethylene oxide structure and a propylene oxide structure. The diol structure is represented by -O-$R^x$-O-, where $R^x$ is an alkylene group having 1 to 6 (preferably 4 to 6) carbon atoms.

The average number Meo of the added moles of ethylene oxide structure per mole of (meth)acryloyl residue in the polymer contained in the polymer electrolyte is preferably 2.5 moles or more. Meo is more preferably 13 to 46. Within the above range, the crosslink density of the polymer main chain becomes more appropriate, so that high lithium ion conductivity can be obtained while maintaining strength at high temperatures. The (meth)acryloyl residue is an addition-polymerized form of (meth)acryloyl group and is represented, for example, by the following structure in formula (1).

[C8]

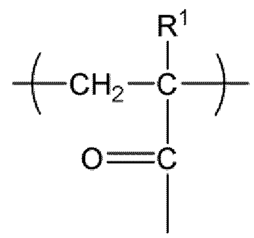

In addition, in the polymer contained in the polymer electrolyte, the average number Mpo of the added moles of propylene oxide structure per mole of (meth)acryloyl residues is preferably 5% to 25%, more preferably 11% to 25%, of the average number Meo of the added moles of ethylene oxide structure per mole of (meth)acryloyl residues. Within the above ranges, the crystallinity of the polymer main chain is suppressed even if the molecular weight between crosslinking points is large, and it becomes easier to suppress the inhibition of lithium ion mobility, especially at low temperatures.

The average numbers Meo and Mpo of the added moles can be measured by decomposing the polymer electrolyte using pyrolysis GC/MS and quantifying the fragments derived from the (meth)acryloyl residues, the fragments derived from the ethylene oxide structures, and the fragments derived from the propylene oxide structures by creating calibration curves for each.

In the polymer electrolyte of the present disclosure, the three-dimensional crosslinked structure of the polymer has a very low crosslink density as described above, and the polymer chain has many free chains that are not bonded at one terminal to other polymer chains. Such a crosslinked structure can be obtained, for example, by reacting the following materials.

- Polyether mono(meth)acrylate.
- At least one selected from the group consisting of polyether di(meth)acrylate and polyether tri(meth)acrylate.
- Ammonium-based ionic compound having an unsaturated reactive functional group.

(Polyether mono(meth)acrylate)

A polyether mono(meth)acrylate can form a structure represented by formula (1) (preferably formula (1-1)). As the polyether mono(meth)acrylate, for example, at least one selected from the group consisting of polyethylene glycol mono(meth)acrylate and polyethylene glycol-propylene glycol copolymer mono(meth)acrylate can be used. When polyethylene glycol-propylene glycol copolymer mono(meth)acrylate is used, the molar ratio of the ethylene glycol structure : propylene glycol structure is preferably 100 : 0 to 50 : 50, and more preferably 80 : 20 to 95 : 5.

When the molar ratio of the ethylene glycol structure : propylene glycol structure is within this range, the lithium ion transportability by the polyethylene glycol can be maintained at a high level, and by combining with the structure of formula (4), it becomes easier to suppress the inhibition of lithium ion movement due to polymer crystallization.

A polyether mono(meth)acrylate is represented, for example, by the following formula (1').

[C9]

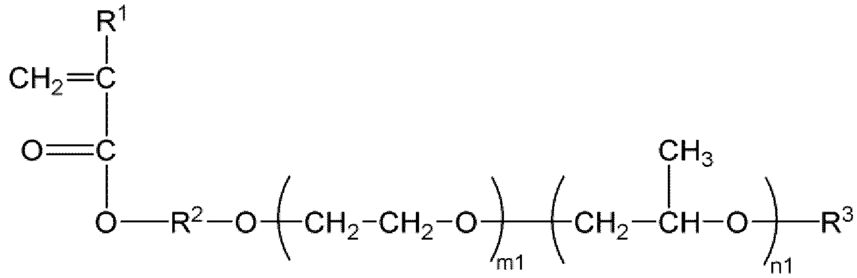

(1')

In formula (1'), $R^1$, $R^2$, $R^3$, m1 and n1 are the same as those in formula (1-1).

(Polyether di(meth)acrylate)

A polyether di(meth)acrylate can form a structure represented by formula (2) (preferably formula (2-1)). As the polyether di(meth)acrylate, for example, at least one selected from the group consisting of polyethylene glycol di(meth) acrylate and polyethylene glycol-propylene glycol copolymer di(meth)acrylate can be used. When polyethylene glycol-propylene glycol copolymer di(meth)acrylate is used, the molar ratio of ethylene glycol structure : propylene glycol structure is preferably 100 : 0 to 50 : 50, more preferably 80 : 20 to 95 : 5.

When the molar ratio of ethylene glycol structure : propylene glycol structure is within this range, the lithium ion transportability by polyethylene glycol can be maintained at a high level, and by combining with the structure of formula (4), it becomes easier to suppress the inhibition of lithium ion movement due to polymer crystallization.

A polyether di(meth)acrylate is represented, for example, by the following formula (2').

[C10]

(2')

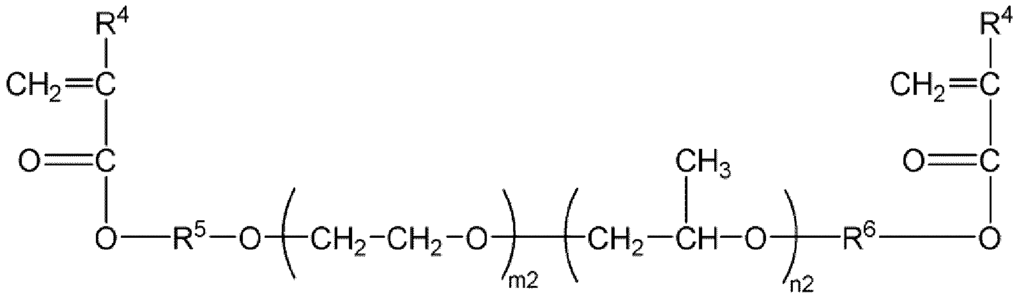

In formula (2'), $R^4$, $R^5$, $R^6$, m2 and n2 are the same as those in formula (2-1).

The chain sandwiched between the two -COO- groups may further contain a diol structure having 1 to 6 (preferably 4 to 6) carbon atoms to the extent that the effect of the present disclosure is not impaired. For example, a diol structure may be contained between the ethylene oxide structure and the propylene oxide structure. The diol structure is represented by $-O-R^x-O-$, where $R^x$ is an alkylene group having 1 to 6 (preferably 4 to 6) carbon atoms.

(Polyether tri(meth)acrylate)

A polyether tri(meth)acrylate can form a structure represented by formula (3) (preferably formula (3-1)). As the polyether tri(meth)acrylate, for example, at least one selected from the group consisting of polyethylene glycol tri(meth) acrylate and polyethylene glycol-propylene glycol copolymer tri(meth)acrylate can be used. When polyethylene glycol-propylene glycol copolymer tri(meth)acrylate is used, the molar ratio of ethylene glycol structure : propylene glycol structure is preferably 100 : 0 to 50 : 50, more preferably 80 : 20 to 95 : 5.

When the molar ratio of ethylene glycol structure : propylene glycol structure is within this range, the lithium ion transportability by polyethylene glycol can be maintained at a high level, and by combining with the structure of formula (4), it becomes easier to suppress the inhibition of lithium ion movement due to polymer crystallization.

A polyether tri(meth)acrylate is, for example, represented by the following formula (3').

[C11]

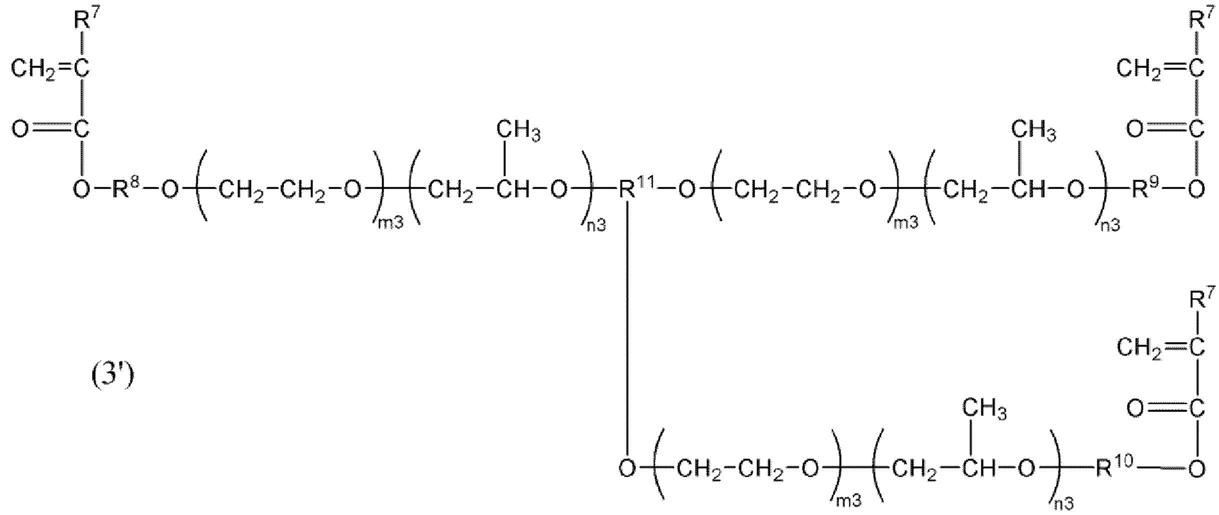

(3')

In formula (3'), $R^7$, $R^8$, $R^9$, $R^{10}$, $R^{11}$, m3 and n3 are the same as those in formula (3-1). The chain sandwiched between -COO- and $R^{11}$ may further contain a diol structure having 1 to 6 (preferably 4 to 6) carbon atoms to the extent that the effect of the present disclosure is not impaired. For example, a diol structure may be contained between the ethylene oxide structure and the propylene oxide structure. The diol structure is represented by -O-$R^x$-O-, where $R^x$ is an alkylene group having 1 to 6 (preferably 4 to 6) carbon atoms.

The structures represented by formulas (1), (2) and (3) (preferably formulas (1-1), (2-1) and (3-1)) can be obtained, for example, by using a polyether polyol obtained by ring-opening polymerization of ethylene oxide and propylene oxide.

The arrangement of the ethylene oxide structure represented by ($-CH_2-CH_2-O-$) and the propylene oxide structure represented by ($-CH_2-CH(CH_3)-O-$) in formula (1-1), formula (2-1), and formula (3-1) (as well as formula (1'), formula (2'), and formula (3')) may be a block copolymer or a random copolymer. A random copolymer is preferable.

The mass content of the structure represented by formula (1) in the polymer contained in the polymer electrolyte is denoted by A. The total mass content of the structure represented by formula (2) and the structure represented by formula (3) in the polymer (preferably the mass content of the structure represented by formula (2)) is denoted by B. The mass ratio A : B of A to B is preferably 70 : 30 to 98 : 2. It is more preferably 88 : 12 to 96 : 4, and even more preferably 90 : 10 to 95 : 5.

The mass ratio A : B can be specifically adjusted by the ratio of polyether mono(meth)acrylate to polyether di(meth)acrylate and/or tri(meth)acrylate.

When the mass ratio A : B is within the above range, the polymer does not have an excessively dense mesh structure, and the movement of lithium ions is less likely to be hindered while maintaining strength, which is particularly preferable.

In the polymer electrolyte, it is preferable that m1 + n1 in formula (1-1) be 1 to 110 (more preferably 14 to 58), and m2 + n2 in formula (2-1) and/or m3 + n3 in formula (3-1) (preferably m2 + n2 and m3 + n3) be 1 to 110 (more preferably 14 to 58). Withing these ranges, the crosslink density of the polymer main chain becomes appropriate, so that the ionic conductivity of the polymer electrolyte is higher while maintaining strength at high temperatures, and the rate characteristics of the secondary battery are also improved.

In the polymer electrolyte, it is preferable that m1 : n1 in formula (1-1) be 80 : 20 to 95 : 5 (more preferably 80 : 20 to 90 : 10), and m2 : n2 in formula (2-1) and/or m3 : n3 in formula (3-1) (preferably m2 : n2 in formula (2-1) and m3 : n3 in formula (3-1)) be 80 : 20 to 95 : 5 (more preferably 85 : 15 to 95 : 5).

Within the above ranges, the crystallinity of the polymer main chain is suppressed even if the molecular weight between crosslinking points is large, and it becomes easier to suppress the inhibition of lithium ion mobility, especially at low temperatures.

<Ammonium cationic group>

The polymer in the polymer electrolyte has at least one structure selected from the group consisting of structures represented by the following formula (4). For example, the structure represented by the following formula (4) can be a reaction product of an ammonium-based ionic compound having an unsaturated reactive functional group.

[C12]

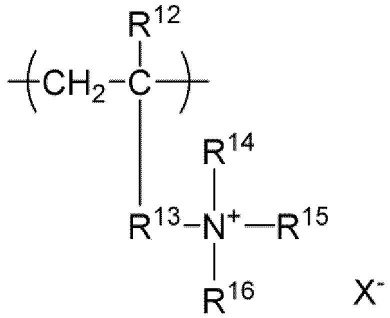

(4)

In formula (4), $R^{12}$ represents a hydrogen atom or a methyl group.

$R^{13}$ represents a divalent linking group. $R^{14}$, $R^{15}$, and $R^{16}$ each independently represents an alkyl group having 1 to 8 (preferably 1 to 4, more preferably 1 or 2, and even more preferably 1) carbon atoms. $X^-$ represents an anion.).

$R^{13}$, which serves as a linking group, specifically represents a linear or branched alkylene group having 1 to 6 (preferably 1 to 4, more preferably 1 or 2, and even more preferably 1) carbon atoms, or a divalent organic group containing an ester bond. The divalent organic group containing an ester bond is preferably an ester bond (-COO-) or a carbonyloxyalkylene having 1 to 6 (preferably 1 to 4, more preferably 1 or 2, and even more preferably 1) carbon atoms of alkylene. Preferably, the carbonyl group in the divalent organic group containing an ester bond is bonded to the carbon to which $R^{12}$ is bonded.

From the standpoint of lithium ion transportability, the polyether composition of the polyether (meth)acrylates, which are the main components of the polymer, is preferably polyethylene glycol. However, polyethylene glycol has high crystallinity, and in order to suppress crystallization, especially at low temperatures, a method of copolymerizing a propylene glycol structure, which has poor lithium ion transportability, at a certain ratio is used. As a result, it is difficult to achieve high ionic conductivity with only the polyether composition with the structures of formulas (1) to (3).

Meanwhile, the structure of formula (4) is a relatively large functional group having multiple alkyl group terminals, so that introduction of the structure of formula (4) into the polymer structure can reduce crystallinity. Therefore, it is possible to suppress crystallization at low temperatures while decreasing the number of propylene glycol structures, which have poor lithium ion transportability, in the polyether composition, and a high ionic conductivity can be maintained even at low temperatures.

In addition, by introducing the structure formula (4) into the polymer structure, the polymer itself becomes ionic, the affinity with lithium salt is improved compared to when the structure formula (4) is not present, and it is possible to dissolve more lithium salt without causing precipitation thereof.

The content of the structure represented by formula (4) in the polymer structure is preferably 1 part by mass to 20 parts by mass, more preferably 1 part by mass to 15 parts by mass, and even more preferably 2 parts by mass to 5 parts by mass per 100 parts by mass of the total of the structures represented by formulas (1), (2), and (3).

Where the content of formula (4) is within this range, it is possible to achieve a higher level of both improved compatibility with the supporting electrolyte and improved ionic conductivity due to reduced crystallinity.

The state after these reactions can be confirmed by analysis using known means such as pyrolysis GC/MS, FT-IR, and NMR.

An ammonium-based ionic compound having an unsaturated reactive functional group capable of forming the structure shown in formula (4) is represented, for example, by the following formula (4').

[C13]

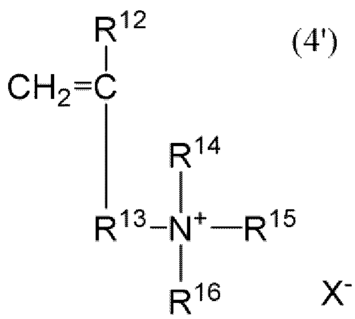

(4')

**In** formula (4'), $R^{12}$ to $R^{16}$ and $X^-$ are the same as those explained in formula (4).

<Anions>

Examples of the anions $X^-$ shown in formula (4) include fluoroalkylsulfonylimide anions, fluorosulfonylimide anions, fluoroalkylsulfonate anions, fluorosulfonate anions, fluoroalkylcarboxylate anions, fluoroalkylmethide anions, fluoroborate anions, fluorophosphate anions, dicyanamide anions, thiocyanate anions, bisoxalatoborate anions, perchlorate anions, and derivatives thereof.

Specific examples of fluoroalkylsulfonylimide anions include fluoroalkylsulfonylimide anions having a fluoroalkyl group having from 1 to 6 carbon atoms, such as bis(trifluoromethanesulfonyl)imide anion, bis(pentafluoroethanesulfonyl)imide anion, bis(heptafluoropropanesulfonyl)imide anion, bis(nonafluorobutanesulfonyl)imide anion, bis(dodecafluoropentanesulfonyl)imide anion, and bis(perfluorohexanesulfonyl)imide anion, and cyclic fluoroalkylsulfonylimide anions such as N,N-hexafluoropropane-1,3-disulfonylimide.

Specific example of fluorosulfonylimide anions is bis(fluorosulfonyl)imide anion.

Specific examples of fluoroalkylsulfonate anions include trifluoromethanesulfonate anion, fluoromethanesulfonate anion, perfluoroethanesulfonate anion, perfluoropropanesulfonate anion, perfluorobutanesulfonate anion, perfluoropentanesulfonate anion, perfluorohexanesulfonate anion, and perfluorooctanesulfonate anion.

Specific examples of fluoroalkylcarboxylate anions include trifluoroacetate anion, perfluoropropionate anion, perfluorobutyrate anion, perfluorovalerate anion, and perfluorocaproate anion.

Specific examples of fluoroalkylmethide anions include fluorinated alkyl sulfonyl methyl anion such as tris(trifluoromethanesulfonyl)methide anion, tris(perfluoroethanesulfonyl)methide anion, tris(perfluoropropanesulfonyl)methide anion, tris(perfluorobutanesulfonyl)methide anion, tris(perfluoropentanesulfonyl)methide anion, tris(perfluorohexanesulfonyl)methide anion, and tris(perfluorooctanesulfonyl)methide anion.

Specific example of the fluoroborate anions is tetrafluoroborate anion.

Specific example of the fluorophosphate anions is hexafluorophosphate anion.

Among these anions, at least one selected from the group consisting of fluoroalkylsulfonylimide anions, fluorosulfonylimide anions, fluoroborate anions, dicyanamide anions, and thiocyanate anions is particularly preferred because it reduces the decrease in conductivity in a low-temperature environment.

More specifically, at least one anion selected from the group consisting of bis(trifluoromethanesulfonyl)imide anion, bis(fluorosulfonyl)imide anion, trifluoromethanesulfonate anion ($CF_3$-$SO_3^-$), hexafluorophosphate anion ($PF_6^-$), fluoroborate anion ($BF_4^-$), dicyanamide anion ($N(CN)_2^-$), and thiocyanate anion ($SCN^-$) is preferred.

More preferably, at least one anion selected from the group consisting of bis(trifluoromethanesulfonyl)imide anion, bis(fluorosulfonyl)imide anion, hexafluorophosphate anion ($PF_6^-$), and dicyanamide anion ($N(CN)_2^-$) is preferred.

<Lithium salt>

The polymer electrolyte contains a lithium salt. The lithium salt is preferably included as a supporting electrolyte in the lithium ion secondary battery. Examples of lithium salts include at least one selected from the group consisting of $LiBF_4$, $LiPF_6$, $LiN(SO_2CF_3)_2$, $LiN(SO_2F)_2$, $LiN(SO_2C_2F_5)_2$, $LiAlCl_4$, $LiSBF_6$, LiSCN, $LiCF_3SO_3$, $LiAsF_6$, $LiClO_4$, $LiN(CN)_2$, lower aliphatic lithium carboxylates, LiCl, LiBR, and LiI.

Among these, at least one selected from the group consisting of lithium bis(trifluoromethanesulfonyl)imide ($LiN(SO_2CF_3)_2$), lithium bis(fluorosulfonyl)imide ($LiN(SO_2F)_2$), and $LiN(C_2F_5SO_2)_2$ is preferred in terms of chemical stability against lithium-based positive electrode active materials. The lithium salts may be used alone or in combination of two or more.

The content of the lithium salt is preferably 5 parts by mass to 40 parts by mass, and more preferably 7 parts by mass to 20 parts by mass, per 100 parts by mass of the polymer in the polymer electrolyte. Where the content of the lithium salt is within this range, the lithium salt will be well compatible with the polymer and will not precipitate, and high ionic conductivity will be obtained.

The polymer electrolyte is preferably a cured product of an electrolyte solution.

The electrolyte solution may be, for example, a mixture of the following materials.

- Polyether mono(meth)acrylate.
- At least one selected from the group consisting of polyether di(meth)acrylate and polyether tri(meth)acrylate.
- Ammonium-based ionic compound having an unsaturated reactive functional group.
- Lithium salt.

If necessary, the electrolyte solution may contain a known polymerization initiator. Examples of the polymerization initiator include photopolymerization initiators.

<Liquid electrolyte>

The polymer electrolyte may contain a liquid electrolyte to the extent that the effect of the present disclosure is not impaired and safety at high temperatures is not impaired. Examples of the liquid electrolyte include ionic liquids and non-aqueous electrolytic solutions.
Specific examples of ionic liquids include the following combinations of cations and anions.
The cation may be at least one selected from the group consisting of quaternary ammonium, imidazolium, pyridinium, pyrrolidinium, and piperidinium.
The anion may be at least one selected from the group consisting of fluoroalkylsulfonylimide anions, fluorosulfonylimide anions, fluoroalkylsulfonate anions, fluorosulfonate anions, fluoroalkylcarboxylate anions, fluoroalkylmethide anions, fluoroborate anions, fluorophosphate anions, dicyanamide anions, thiocyanate anions, bisoxalatoborate anions, perchlorate anions, and derivatives thereof.
The non-aqueous electrolytic solution is a liquid in which about 1 mole of lithium salt is dissolved in a non-aqueous solvent. Examples of non-aqueous solvents include ethylene carbonate, propylene carbonate, dimethyl carbonate, diethyl carbonate, and ethyl methyl carbonate. Examples of lithium salts include $LiPF_6$, $LiBF_4$, and $LiClO_4$.
Although the inclusion of a liquid electrolyte may improve ionic conductivity, in order to avoid a decrease in mechanical strength at high temperatures, it is preferable that the liquid electrolyte be contained at, for example, 10 parts by mass or less, 5 parts by mass or less, 1 part by mass or less, or 0.5 parts by mass or less per 100 parts by mass of the polymer contained in the polymer electrolyte.
The polymer electrolyte may contain a non-conductive filler such as silica, quartz powder, titanium oxide, zinc oxide, and calcium carbonate as necessary. By adding the non-conductive filler to the coating material for forming the electrolyte layer, the filler functions as film-forming aid when the coating material is coated in the step for forming the electrolyte layer. The content of such non-conductive filler is preferably from 0.1 parts by mass to 10 parts by mass per 100 parts by mass of the polymer forming the electrolyte layer.
Furthermore, if necessary, the polymer electrolyte may contain a conductive filler within a range that does not impede the effects of the present disclosure. As the conductive filler, conductive fine particles such as carbon black, zinc oxide, tin oxide, and titanium oxide can be used.
**In** particular, when a polymer electrolyte is used as a positive or negative electrode active material binder, the internal resistance of the secondary battery can be reduced by including a conductive filler in the polymer electrolyte. The content of the conductive filler is preferably from 0.5 parts by mass to 5 parts by mass with respect to 100 parts by mass of the polymer contained in the polymer electrolyte.

(Method for forming polymer electrolyte layer)

A method of forming the polymer electrolyte layer is not particularly limited. For example, the above-mentioned polymer electrolyte materials are used and mixed by a known method to obtain an electrolyte solution for forming a polymer electrolyte layer. After the electrolyte solution is coated by a known coating method such as bar coating, spin coating, or roll coating, the polymer material contained in the electrolyte solution is polymerized by a known means such as UV to form a polymer electrolyte layer. The polymer electrolyte layer can be formed at a desired position, such as on the positive electrode or negative electrode.
The thickness of the polymer electrolyte layer as a bulk electrolyte is preferably from 5.0 μm to 100.0 μm.

EXAMPLES

Specific examples and comparative examples related to the present disclosure are shown below. However, the present disclosure is not limited to the following examples and comparative examples.
First, polyether acrylates that form the structures shown in formula (1) and formula (2) were synthesized. Synthesis examples of polyether monoacrylates that can form the structure shown in formula (1) are shown below.

<Synthesis of polyether monoacrylates>

(Polyether monoacrylate A-1)

A total of 15.5 parts by mass of 1-hexanol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 1041 parts by mass of a gas mixture of ethylene oxide/propylene oxide in a molar ratio of 8 : 2 was continuously introduced over 260 min while maintaining the pressure inside the container at approximately 0.5 MPa. The temperature was maintained at

100°C and the reaction was conducted for 180 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 6000.

Next, 100 parts by mass of the obtained polyether monool, 1.26 parts by mass of acrylic acid (manufactured by Nippon Shokubai Co., Ltd.), 2.02 parts by mass of paratoluenesulfonic acid (manufactured by Tokyo Chemical Industry Co., Ltd.), 0.08 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C, and reacted for 5 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-1.

(Polyether monoacrylate A-2)

A total of 18.6 parts by mass of 1-hexanol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 976 parts by mass of a gas mixture of ethylene oxide/propylene oxide in a molar ratio of 95 : 5 was continuously introduced over 240 min while maintaining the pressure inside the container at approximately 0.5 MPa. The temperature was maintained at 100°C and the reaction was conducted for 180 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 5000.

Next, 100 parts by mass of the obtained polyether monool, 1.51 parts by mass of acrylic acid (manufactured by Nippon Shokubai Co., Ltd.), 2.42 parts by mass of paratoluenesulfonic acid (manufactured by Tokyo Chemical Industry Co., Ltd.), 0.08 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C, and reacted for 5 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-2.

(Polyether monoacrylate A-3)

Polyether monoacrylate A-3 was obtained in the same manner as polyether monoacrylate A-2, except that the molar ratio of the ethylene oxide/propylene oxide mixed gas was changed to 8 : 2.

(Polyether monoacrylate A-4)

A total of 33.7 parts by mass of 1-butanol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 984 parts by mass of a gas mixture of ethylene oxide/propylene oxide in a molar ratio of 8 : 2 was continuously introduced over 240 min while maintaining the pressure inside the container at approximately 0.5 MPa. The temperature was maintained at 100°C and the reaction was conducted for 150 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 2000.

Next, 100 parts by mass of the obtained polyether monool, 3.78 parts by mass of acrylic acid (manufactured by

Nippon Shokubai Co., Ltd.), 6.05 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-4.

(Polyether monoacrylate A-5)

A total of 67.4 parts by mass of 1-butanol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 946 parts by mass of a gas mixture of ethylene oxide/propylene oxide in a molar ratio of 8 : 2 was continuously introduced over 240 min while maintaining the pressure inside the container at approximately 0.5 MPa. The temperature was maintained at 100°C and the reaction was conducted for 130 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 1000.

Next, 100 parts by mass of the obtained polyether monool, 7.56 parts by mass of acrylic acid (manufactured by Nippon Shokubai Co., Ltd.), 12.1 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-5.

(Polyether monoacrylate A-6)

A total of 112 parts by mass of 1-butanol (Tokyo Chemical Industry Co., Ltd.) and 5 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 937 parts by mass of a gas mixture of ethylene oxide/propylene oxide in a molar ratio of 8 : 2 was continuously introduced over 240 min while maintaining the pressure inside the container at approximately 0.5 MPa. The temperature was maintained at 100°C and the reaction was conducted for 120 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 600.

Next, 100 parts by mass of the obtained polyether monool, 12.6 parts by mass of acrylic acid (manufactured by Nippon Shokubai Co., Ltd.), 20.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-6.

(Polyether monoacrylate A-7)

A total of 169 parts by mass of 1-butanol (Tokyo Chemical Industry Co., Ltd.) and 8 parts by mass of potassium

hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 927 parts by mass of a gas mixture of ethylene oxide/propylene oxide in a molar ratio of 8 : 2 was continuously introduced over 220 min while maintaining the pressure inside the container at approximately 0.5 MPa. The temperature was maintained at 100°C and the reaction was conducted for 120 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether monool with Mn 400.

Next, 100 parts by mass of the obtained polyether monool, 18.9 parts by mass of acrylic acid (manufactured by Nippon Shokubai Co., Ltd.), 24.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monoacrylate A-7.

(Polyether monoacrylate A-8)

Polyether monoacrylate A-8 was obtained in the same manner as polyether monoacrylate A-5, except that the molar ratio of the ethylene oxide/propylene oxide mixed gas was changed to 9 : 1.

(Polyether monoacrylate A-9)

Polyether monoacrylate A-9 was obtained in the same manner as polyether monoacrylate A-5, except that the molar ratio of the ethylene oxide/propylene oxide mixed gas was changed to 5 : 5.

(Polyether monoacrylate A-10)

Polyether monool with Mn 600 was obtained in the same manner as in preparation of polyether monoacrylate A-6, except that the molar ratio of the ethylene oxide/propylene oxide mixed gas was changed to 5 : 5.

Next, 100 parts by mass of the obtained polyether monool, 15.0 parts by mass of methacrylic acid (manufactured by Mitsubishi Gas Chemical Co., Ltd.), 20.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monomethacrylate A-10.

(Polyether monoacrylate A-11)

Polyether monool with Mn 400 was obtained in the same manner as in preparation of polyether monoacrylate A-7, except that the molar ratio of the ethylene oxide/propylene oxide mixed gas was changed to 5 : 5.

Next, 100 parts by mass of the obtained polyether monool, 22.6 parts by mass of methacrylic acid (manufactured by Mitsubishi Gas Chemical Co., Ltd.), 24.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether monomethacrylate A-11.

The obtained polyether mono(meth)acrylates are shown in Table 1.

Described next are synthesis examples of polyether diacrylates that can form the structure shown in formula (2).

<Synthesis of polyether diacrylates>

(Polyether diacrylate B-1)

A total of 13.7 parts by mass of 1,4-butanediol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 1041 parts by mass of a gas mixture of ethylene oxide/propylene oxide in a molar ratio of 8 : 2 was continuously introduced over 280 min while maintaining the pressure inside the container at approximately 0.5 MPa. The temperature was maintained at 100°C and the reaction was conducted for 170 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether diol with Mn 6000.

Next, 100 parts by mass of the obtained polyether diol, 2.52 parts by mass of acrylic acid (manufactured by Nippon Shokubai Co., Ltd.), 2.02 parts by mass of paratoluenesulfonic acid (manufactured by Tokyo Chemical Industry Co., Ltd.), 0.08 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 5 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether diacrylate B-1.

(Polyether diacrylate B-2)

A polyether diol of Mn 5000 was obtained in the same manner as in the preparation of polyether diacrylate B-1, except that the amount of 1,4-butanediol (manufactured by Tokyo Chemical Industry Co., Ltd.) was changed to 16.4 parts by mass.

Next, 100 parts by mass of the obtained polyether diol, 3.02 parts by mass of acrylic acid (manufactured by Nippon Shokubai Co., Ltd.), 2.42 parts by mass of paratoluenesulfonic acid (manufactured by Tokyo Chemical Industry Co., Ltd.), 0.08 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 5 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether diacrylate B-2.

(Polyether diacrylate B-3)

A total of 41.0 parts by mass of 1,4-butanediol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 955 parts by mass of a gas mixture of ethylene oxide/propylene oxide in a molar ratio of 9 : 1 was continuously introduced over 220 min while maintaining the pressure inside the container at approximately 0.5 MPa. The temperature was maintained at 100°C and the reaction was conducted for 150 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether diol with Mn 2000.

Next, 100 parts by mass of the obtained polyether diol, 7.56 parts by mass of acrylic acid (manufactured by Nippon Shokubai Co., Ltd.), 6.05 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene

were placed in a Dean-Stark reactor equipped with a stirring device. The mixture was heated and stirred at 115°C and reacted for 5 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether diacrylate B-3.

(Polyether diacrylate B-4)

A total of 205 parts by mass of 1,4-butanediol (Tokyo Chemical Industry Co., Ltd.) and 2 parts by mass of potassium hydroxide (Kojundo Chemical Laboratory Co., Ltd.) were placed in an autoclave and stirred under reduced pressure at 120°C to dissolve and dehydrate. Next, the pressure inside the system was reduced to -0.1 MPa at 100°C, and 899 parts by mass of a gas mixture of ethylene oxide/propylene oxide in a molar ratio of 9 : 1 was continuously introduced over 210 min while maintaining the pressure inside the container at approximately 0.5 MPa. The temperature was maintained at 100°C and the reaction was conducted for 110 min until the pressure inside the vessel became 0.2 MPa or less. The temperature was then raised to 130°C over 30 min, and the mixture was stirred until the change in pressure inside the vessel became 0.01 MPa/30 min. A total of 20 parts by mass of pure water was added to the obtained polymer, stirring was conducted at 90°C for 30 min, after which 50 g of an alkaline adsorbent Kyowaad 600 (manufactured by Kyowa Chemical Industry Co., Ltd.) was added and the mixture was stirred for another 30 min. The alkaline adsorbent was then removed by filtration, and the mixture was dried under reduced pressure at 130°C to obtain polyether diol with Mn 400.

Next, 100 parts by mass of the obtained polyether diol, 37.8 parts by mass of acrylic acid (manufactured by Nippon Shokubai Co., Ltd.), 24.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether diacrylate B-4.

(Polyether diacrylate B-5)

A polyether diol with Mn 600 was obtained in the same manner as in the preparation of polyether diacrylate B-4, except that the amount of 1,4-butanediol (manufactured by Tokyo Chemical Industry Co., Ltd.) was changed to 137 parts by mass.

Next, 100 parts by mass of the obtained polyether diol, 25.2 parts by mass of acrylic acid (manufactured by Nippon Shokubai Co., Ltd.), 20.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced pressure to obtain polyether diacrylate B-5.

(Polyether diacrylate B-6)

A polyether diol with Mn 1000 was obtained in the same manner as in the preparation of polyether diacrylate B-3, except that the amount of 1,4-butanediol (manufactured by Tokyo Chemical Industry Co., Ltd.) was changed to 82.0 parts by mass.

Next, 100 parts by mass of the obtained polyether diol, 15.1 parts by mass of acrylic acid (manufactured by Nippon Shokubai Co., Ltd.), 12.1 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system.

The reaction liquid temperature was then lowered to room temperature, and the mixture was washed twice with 120 g of a 5% aqueous sodium hydroxide solution, and further washed three times with 120 g of pure water. The organic phase was separated by fractionation from the reaction liquid after washing, and the solvent was distilled off under reduced

pressure to obtain polyether diacrylate B-6.

(Polyether diacrylate B-7)

Polyether diacrylate B-7 was obtained in the same manner as polyether diacrylate B-2, except that the molar ratio of the ethylene oxide/propylene oxide mixed gas was changed to 9 : 1.

(Polyether diacrylate B-8)

A polyether diol of Mn 1000 was obtained in the same manner as in the preparation of polyether diacrylate B-6, except that the molar ratio of the ethylene oxide/propylene oxide mixed gas was changed to 5 : 5.

Next, 100 parts by mass of the obtained polyether diol, 18.1 parts by mass of methacrylic acid (manufactured by Mitsubishi Gas Chemical Co., Ltd.), 12.1 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 6 h while removing water produced by the reaction to the outside of the system. Polyether diacrylate B-8 was then obtained in the same manner as polyether diacrylate B-6.

(Polyether diacrylate B-9)

A polyether diol of Mn 600 was obtained in the same manner as in the preparation of polyether diacrylate B-5, except that the molar ratio of the ethylene oxide/propylene oxide mixed gas was changed to 5 : 5.

Next, 100 parts by mass of the obtained polyether diol, 30.0 parts by mass of methacrylic acid (manufactured by Mitsubishi Gas Chemical Co., Ltd.), 20.2 parts by mass of paratoluenesulfonic acid (manufactured by Tokyo Chemical Industry Co., Ltd.), 0.11 parts by mass of hydroquinone (manufactured by Tokyo Chemical Industry Co., Ltd.), and 250 ml of toluene were placed in a Dean-Stark reactor equipped with a stirring device. The mixture was heated and stirred at 115°C and reacted for 5 h while removing water produced by the reaction to the outside of the system. Polyether diacrylate B-9 was then obtained in the same manner as polyether diacrylate B-6.

The obtained polyether di(meth)acrylates are shown in Table 2.

[Table 1]

Table 1

| | Molecular structure | Polyether composition ratio | | Polyether | Molecular weight | Number of carbon atoms | | Average number of the added moles | |
|---|---|---|---|---|---|---|---|---|---|
| | | EO | PO | Starting material | | R2 | R3 | m1 | n1 |
| A-1 | Monoacrylate | 80 | 20 | 1-Hexanol | 6000 | 2 or 3 | 6 | 108 | 20 |
| A-2 | | 95 | 5 | | 5000 | 2 or 3 | 6 | 106 | 4 |
| A-3 | | 80 | 20 | | 5000 | 2 or 3 | 6 | 89 | 17 |
| A-4 | | 80 | 20 | 1-Butanol | 2000 | 2 or 3 | 4 | 35 | 7 |
| A-5 | | 80 | 20 | | 1000 | 2 or 3 | 4 | 17 | 3 |
| A-6 | | 80 | 20 | | 600 | 2 or 3 | 4 | 10 | 2 |
| A-7 | | 80 | 20 | | 400 | 2 or 3 | 4 | 6 | 1 |
| A-8 | | 90 | 10 | | 1000 | 2 or 3 | 4 | 19 | 2 |
| A-9 | | 50 | 50 | | 1000 | 2 or 3 | 4 | 11 | 8 |
| A-10 | Monomethacrylate | 50 | 50 | | 600 | 2 or 3 | 4 | 6 | 5 |
| A-11 | | 50 | 50 | | 400 | 2 or 3 | 4 | 4 | 3 |

The polyether composition ratio indicates mole fractions. EO indicates ethylene oxide, and PO indicates propylene oxide.

[Table 2]

Table 2

| | Molecular structure | Polyether composition ratio | | Polyether | Molecular weight | Number of carbon atoms | | Average number of the added moles | |
|---|---|---|---|---|---|---|---|---|---|
| | | EO | PO | Starting material | | R5 | R6 | m2 | n2 |
| B-1 | Diacrylate | 80 | 20 | 1,4-Butanediol | 6000 | 2or3 | 2or3 | 109 | 21 |
| B-2 | | 80 | 20 | | 5000 | 2or3 | 2or3 | 91 | 17 |
| B-3 | | 90 | 10 | | 2000 | 2or3 | 2or3 | 41 | 3 |
| B-4 | | 90 | 10 | | 400 | 2or3 | 2or3 | 8 | 1 |
| B-5 | | 90 | 10 | | 600 | 2or3 | 2or3 | 12 | 1 |
| B-6 | | 90 | 10 | | 1000 | 2or3 | 2or3 | 20 | 2 |
| B-7 | | 90 | 10 | | 5000 | 2or3 | 2or3 | 102 | 9 |
| B-8 | Dimethacrylate | 50 | 50 | | 1000 | 2or3 | 2or3 | 11 | 9 |
| B-9 | | 50 | 50 | | 600 | 2or3 | 2or3 | 7 | 5 |

The polyether composition ratio indicates molar ratio. EO indicates ethylene oxide, and PO indicates propylene oxide.

<Synthesis of reactive ionic compounds>

(Synthesis of ionic compound C-1)

A total of 15.0 g (0.11 mol) of allyltrimethylammonium chloride (Combi-Blocks Inc.) was dissolved in 160 mL of pure water. A total of 31.7 g (0.11 mol) of lithium bis(trifluoromethanesulfonyl)imide (product name: EF-N115, manufactured by Mitsubishi Materials Electronic Chemicals Co., Ltd.) was added as an anion raw material and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-1.

(Synthesis of ionic compound C-2)

A total of 15.0 g (0.11 mol) of allyltrimethylammonium chloride (Combi-Blocks Inc.) was dissolved in 160 mL of pure water. A total of 9.8 g (0.11 mol) of sodium dicyanamide (manufactured by Tokyo Chemical Industry Co., Ltd.) was added as an anion source and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-2.

(Synthesis of ionic compound C-3)

A total of 12.1 g (0.06 mol) of 8-bromo-1-octene (manufactured by Tokyo Chemical Industry Co., Ltd.) was added to 15.0 g (0.06 mol) of trimethylamine (approximately 25% ethanol solution, approximately 3 mol/L) (manufactured by Tokyo Chemical Industry Co., Ltd.), and the reaction system was placed under a nitrogen atmosphere and then stirred at room temperature for 43 h. The solvent was distilled off under reduced pressure, and the mixture was washed three times with 100.0 g of n-hexane. The upper layer was removed by separation, and the solvent was distilled off under reduced pressure. The resulting product was dissolved in 160 mL of pure water. A total of 9.6 g (0.06 mol) of lithium hexafluorophosphate (manufactured by Fujifilm Wako Pure Chemical Industries, Ltd.) was added as an anion raw material, and stirring was performed at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-3.

(Synthesis of ionic compound C-4)

(2-Acryloyloxyethyl)trimethylammonium=bis(trifluoromethanesulfonyl)imide (manufactured by Fujifilm Wako Pure Chemical Industries, Ltd.) was used as is.

(Synthesis of ionic compound C-5)

A total of 15.0 g (0.06 mol) of [2-(acryloyloxy)ethyl]trimethylammonium chloride solution (manufactured by Merck & Co., Inc.) was dissolved in 160 mL of pure water. A total of 11.6 g (0.06 mol) of lithium bis(fluorosulfonyl)imide (manufactured by Kanto Chemical Co., Inc.) was added as an anion raw material and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-5.

(Synthesis of ionic compound C-6)

N-[2-(methacryloyloxy)ethyl]-N,N-dimethylbutane-1-aminium bis(trifluoromethanesulfonyl)imide (manufactured by Tokyo Chemical Industry Co., Ltd.) was used as is.

(Synthesis of ionic compound C-7)

A total of 15.0 g (0.10 mol) of (dimethylamino)methyl 2-methylprop-2-enoate (manufactured by Hong Kong Chemhere Co., Ltd.) was dissolved in 30.0 g of tetrahydrofuran. The reaction system was then placed under a nitrogen atmosphere and ice-cooled. Next, 20.2 g (0.10 mol) of 1-bromooctane (manufactured by Tokyo Chemical Industry Co., Ltd.) dissolved in 60.0 g of tetrahydrofuran was added dropwise over 30 min. The reaction solution was heated under reflux for 9 h, after which 100 ml of water was added and the solvent was distilled off under reduced pressure. A total of 100 ml of ethanol was added to the residue and stirred at room temperature. Insoluble matter was removed by celite filtration, and the solvent was again distilled off under reduced pressure.

The resulting product was dissolved in 160 ml of pure water, and 30.1 g (0.10 mol) of lithium bis(trifluoromethanesulfonyl)imide (product name: EF-N115, manufactured by Mitsubishi Materials Electronic Chemicals Co., Ltd.) was added as an anion raw material and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-7.

(Synthesis of ionic compound C-8)

A total of 15.0 g (0.08 mol) of 2-(diethylamino)ethyl methacrylate (manufactured by Tokyo Chemical Industry Co., Ltd.) was dissolved in 30.0 g of tetrahydrofuran. Next, the reaction system was placed under a nitrogen atmosphere and ice-cooled. Next, 8.8 g (0.08 mol) of bromoethane (manufactured by Tokyo Chemical Industry Co., Ltd.) dissolved in 60.0 g of tetrahydrofuran was added dropwise over 30 min. The reaction solution was heated under reflux for 9 h, after which 100 ml of water was added and the solvent was distilled off under reduced pressure. A total of 100 ml of ethanol was added to the residue and stirred at room temperature. Insoluble matter was removed by celite filtration, and the solvent was again distilled off under reduced pressure.

The resulting product was dissolved in 160 ml of pure water, and 23.2 g (0.10 mol) of lithium bis(trifluoromethanesulfonyl)imide (product name: EF-N115, manufactured by Mitsubishi Materials Electronic Chemicals Co., Ltd.) was added as an anion raw material and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-8.

(Synthesis of ionic compound C-9)

After placing the reaction system under a nitrogen atmosphere, a total of 14.0 g (0.06 mol) of 4-bromobutyl methacrylate (manufactured by Hong Kong Chemhere Co., Ltd.) dissolved in 40.0 g of ethanol was added dropwise over

30 min to 15.0 g (0.06 mol) of trimethylamine (approximately 25% ethanol solution, approximately 3 mol/L) (manufactured by Tokyo Chemical Industry Co., Ltd.). The reaction solution was heated under reflux for 6 h, and the solvent was distilled off under reduced pressure.

The resulting product was dissolved in 160 ml of pure water, and 18.2 g (0.06 mol) of lithium bis(trifluoromethanesulfonyl)imide (product name: EF-N115, manufactured by Mitsubishi Materials Electronic Chemicals Co., Ltd.) was added as an anion raw material and stirred at room temperature for 1 h. Next, the reaction solution was extracted twice with 100.0 g of ethyl acetate. Next, the separated ethyl acetate layer was washed three times with 60 g of ion-exchanged water. Then, the ethyl acetate was distilled off under reduced pressure to obtain ionic compound C-9.

The chemical structures of the obtained reactive ionic compounds are shown in formulas C-1 to C-9.

[C14]

C-1

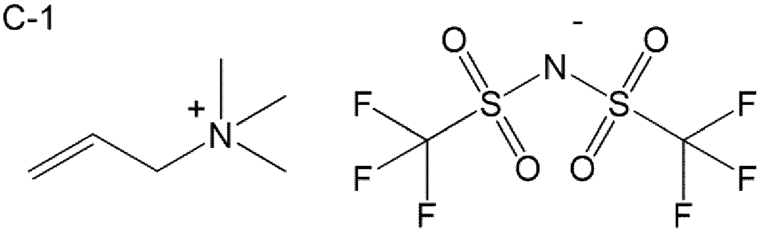

C-2

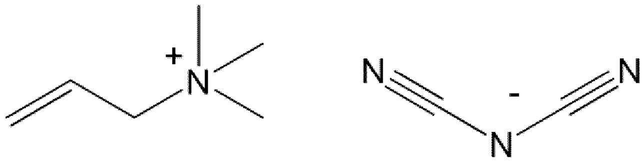

C-3

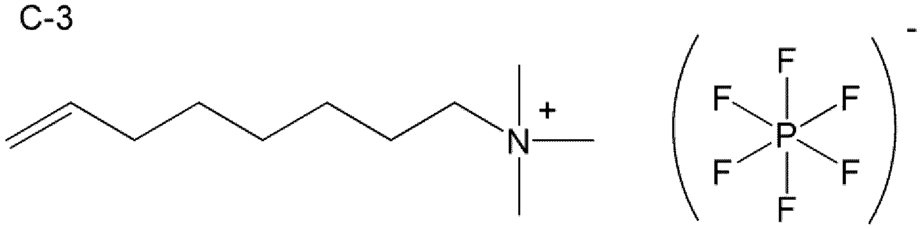

C-4

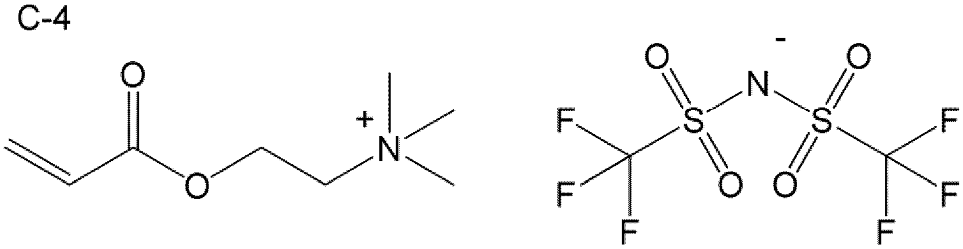

C-5

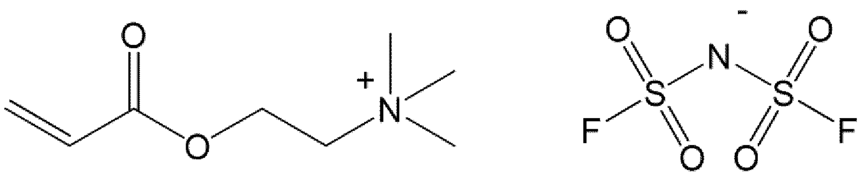

[C15]

C-6

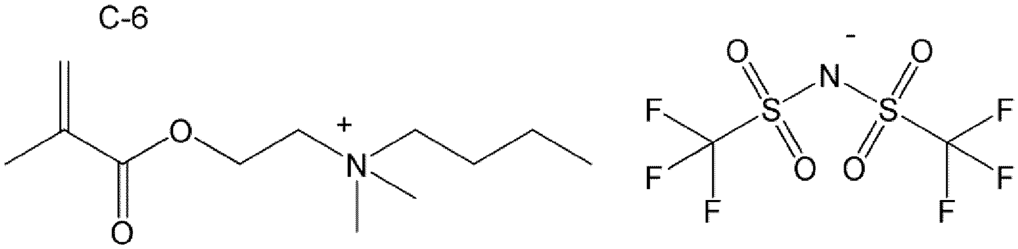

C-7

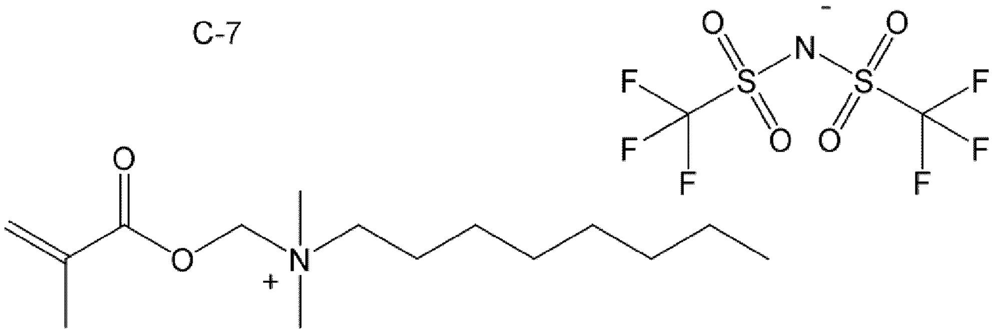

C-8

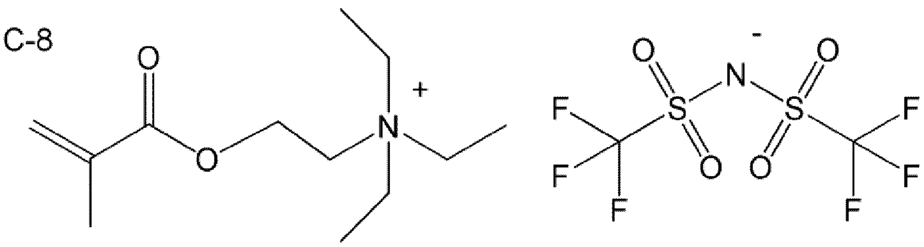

C-9

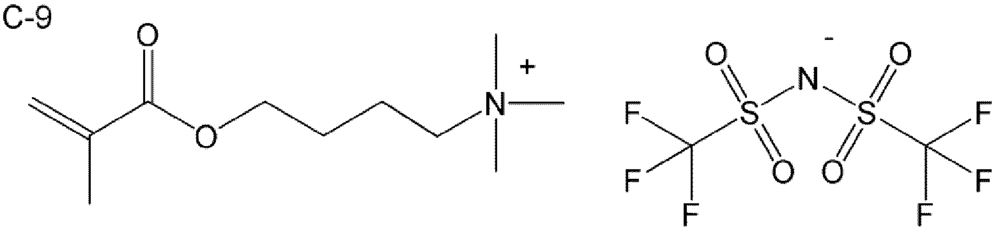

<Preparation of electrolyte solution of polymer electrolyte>

[Example 1]

The following materials were mixed and stirred as materials for the polymer electrolyte.

- Polyether monoacrylate NK Ester M-230G (manufactured by Shin-Nakamura Chemical Co., Ltd.): 50.0 parts by mass
- Polyether diacrylate B-1: 50.0 parts by mass
- Ionic compound C-3: 2.0 parts by mass
- Lithium bis(trifluoromethanesulfonyl)imide (Li·TFSI) (manufactured by Kishida Chemical Co., Ltd.): 10.0 parts by mass
- Initiator Omnirad 184 (IGM RESINS B.V.): 2.0 parts by mass

Next, methyl ethyl ketone (hereinafter referred to as MEK) was added so that the total solids ratio was 60% by mass, and then mixing was performed with a motor stirrer to prepare an electrolyte solution.

(Measurement of volume swelling ratio by MEK immersion method)

Test pieces for volume swelling ratio by MEK immersion method were prepared as follows using the electrolyte solutions of each Example. A predetermined amount of a surface layer forming dispersion liquid of each Example was added to an aluminum mold with a fluororesin coating on the surface to give a film thickness of 200 μm. The mold was then placed on a sunflower stand for drying until the viscosity increased to the point where the film surface did not flow, and then the mold was placed on a horizontal stand for drying at 60°C for 2 h.

Then, using a high-pressure mercury UV irradiation device (product name: Handy 1000, manufactured by Mario Network Co., Ltd.), the film surface was irradiated with UV light in an air atmosphere to an integrated light dose of 5000 $mJ/cm^2$ to crosslink and cure the polymer electrolyte.

After curing, the mold was allowed to stand in an environment of 23°C and 40% RH for 24 h, and the electrolyte film was peeled off from the aluminum mold to prepare a sheet with a film thickness of 200 μm. The obtained polymer electrolyte sheet was cut into 50 mm × 50 mm and allowed to stand in an environment of 23°C and 40% RH for 24 h to prepare a test piece.

First, the initial weight (W1) in air and the initial weight (W2) in water were measured in an environment of 23°C and 40%. Next, the test piece after the initial weight measurement was immersed in MEK at 23°C for 48 h. Immediately after removing the test piece from MEK, the MEK on the surface was wiped off with a nonwoven fabric, and the test piece was placed in a weighing bottle that had been weighed in advance, and the weight (W3) after immersion in air and the weight (W4) after immersion in water were measured. The volume swelling ratio after immersion in MEK was calculated using the following formula.

$$\text{Volume swelling ratio (\%)} = ((W3 - W4) - (W1 - W2))/(W1 - W2) \times 100$$

W1: Initial weight in air
W2: Initial weight in water
W3: Weight after immersion in air
W4: Weight after immersion in water

(Measurement of ionic conductivity at room temperature (25°C))

The electrolyte solution obtained in Example 1 was coated on an aluminum plate with a thickness of 100 μm using a bar coater, and dried at 60°C for 30 min. Next, using a high-pressure mercury UV irradiation device (product name: Handy 1000, manufactured by Mario Network Co., Ltd.), the film surface was irradiated with UV light to an integrated light dose of 5000 $mJ/cm^2$, and the polymer electrolyte film of Example 1 was crosslinked and cured. The film thickness after curing was 60 μm.

The obtained polymer electrolyte film was punched out together with the aluminum substrate to a diameter of 50 mm, and vacuum dried at 80°C for 48 h. The polymer electrolyte film was then placed in an argon-substituted glove box (temperature 25°C, dew point -70°C) and the AC impedance between the electrodes was measured using an impedance analyzer E4990A (manufactured by KEYSIGHT) at an applied voltage of 10 mV and a frequency range of 100 MHz to 1 Hz. The bulk resistance $R_B$ (Ω) was determined from the real impedance intercept of the obtained cole-cole plot, and the ionic conductivity was calculated using the following formula:

$\sigma = L/RB \times S$ ($\sigma$: ionic conductivity ($S \cdot cm^{-1}$), L: sample thickness (cm), S: sample area ($cm^2$)).

(Measurement of ionic conductivity at low temperature (5°C))

A polymer electrolyte film was formed on an aluminum plate in the same manner as in the measurement of ionic conductivity at room temperature. The polymer electrolyte film was then placed in an argon-substituted glove box (temperature 25°C, dew point -70°C) and incorporated into an all-solid-state battery evaluation cell (manufactured by Hohsen Corp.).

The evaluation cell incorporating the polymer electrolyte film was placed in a low-temperature environmental tester and allowed to stand at 5°C for 1 h. The ionic conductivity at low temperature was then determined in the same manner as in the above measurement.

<Preparation of secondary battery>

1. Configuration using the polymer electrolyte of the present disclosure as a bulk electrolyte

(Preparation of negative electrode)

A 20 mm × 20 mm, 60 μm thick lithium foil (manufactured by Honjo Metal Co., Ltd.) was laminated on a 20 mm × 30 mm, 20 μm thick copper foil, leaving a 10 mm non-laminated end on one side, and then pressing was performed to prepare a negative electrode. The total thickness of the prepared negative electrode was 70 μm. A nickel-plated 5 mm wide copper tab was joined to the non-laminated end on one side of the negative electrode.

(Preparation of positive electrode)

A total of 100 parts by mass of lithium cobalt oxide (manufactured by Fujifilm Wako Pure Chemical Industries, Ltd.) was mixed with 7 parts by mass of Kureha KH Polymer L#1120 (manufactured by Kureha Corporation) as an active material binder, and 5 parts by mass of Denka Black Li-100 (manufactured by Denka Corporation) as a conductive auxiliary material, and 40 parts by mass of N-methylpyrrolidone was added and mixed and stirred. The resulting slurry was then coated onto a 15 mm × 25 mm, 20 μm thick rolled aluminum foil, leaving a 10 mm uncoated end on one side, and then dried at 100°C for 30 min and pressed to obtain a positive electrode. The thickness of the positive electrode was 80 μm.

A 5 mm wide aluminum tab was attached to the uncoated end on one side of the positive electrode.

(Formation of polymer electrolyte layer)

The electrolyte solution was coated using a bar coater on the entire surface of the obtained positive electrode coated with the active material, and was air-dried at 23°C for 10 min, and then dried at 60°C for 30 min. Next, using a high-pressure mercury UV irradiation device (product name: Handy 1000, manufactured by Mario Network Co., Ltd.), the film surface was irradiated with UV light to an integrated light dose of 5000 $mJ/cm^2$ to perform curing. The film thickness after curing was 60 μm.

(Preparation of secondary battery using polymer electrolyte as bulk electrolyte)

The positive electrode coated with the polymer electrolyte was vacuum-dried at 80°C for 48 h. The polymer electrolyte film was then placed in an argon-substituted glove box (temperature 25°C, dew point -70°C), and a polyimide sheet punched into a window frame was attached so as to cover the outer periphery portion of the positive electrode surface to form a short-circuit prevention layer. Next, the polymer electrolyte layer of the positive electrode coated with the polymer electrolyte was laminated so that it corresponded to the lithium layer of the negative electrode. The laminate was sandwiched between aluminum laminate films and vacuum-packed to obtain a secondary battery according to Example 1.

<Evaluation of battery characteristics>

(Rate characteristic)

The theoretical capacity was determined from the total mass of lithium cobalt oxide contained in the positive electrode. A charge/discharge test was performed on the prototype secondary battery at 25°C by using a charge/-discharge device BCS-805 (manufactured by BioLogic Co., Ltd.).

The theoretical capacity was determined from the total mass of lithium cobalt oxide contained in the positive electrode, and in the first cycle,

- charging was performed for 2 h by constant-current charging at a charging rate of 0.05C with a cutoff value of 3.9 V, and
- discharging was performed for 1 h by constant-current discharging at a discharging rate of 0.05C with a cutoff value of 2.0 V.

Then, similar charging and discharging were performed by increasing the charging and discharging rates by 0.05C each time, and the rates at which the battery could be charged and discharged without exceeding the cutoff value were determined as the rate characteristics.

(Strength evaluation at high temperature)

The prototype secondary battery was subjected to impact once in a 25°C environment by using a thin film impact testing machine QC-633 (manufactured by Cometech Testing MAchines Co., Ltd.) with an impact tip diameter of 38.1 mm, a load of 120 g, and a height of 150 mm. Then, a short circuit test was performed on the battery by using a tester. Five batteries were produced for each example, a total of five impact tests were performed, and the number of batteries that short-circuited was counted.
The impact testing machine and secondary battery were then placed in an environmental testing machine set at 60°C, and allowed to stand for 2 h. The same test was performed, and the number of batteries that short-circuited in the high-temperature test was counted.

[Examples 2 to 34]

The polymer electrolytes and secondary batteries according to Examples 2 to 34 were prepared in the same manner as in Example 1, except that the types and amounts of polyether mono(meth)acrylate, polyether di(meth)acrylate, ionic compound, and supporting electrolyte were changed as shown in Table 3.

[Table 3]

Table 3

| | Polyether mono(meth) acrylate | | Polyether di(meth) acrylate or tri(meth) acrylate | | Reactive ion | | Supporting electrolyte | |
|---|---|---|---|---|---|---|---|---|
| | No. | parts by mass | No. | parts by mass | No. | parts by mass | No. | parts by mass |
| Example 1 | M-230G | 50 | B-1 | 50 | C-3 | 2 | Li•TFSI | 10 |
| Example 2 | A-1 | 50 | 14G | 50 | C-3 | 2 | Li•TFSI | 10 |
| Example 3 | A-2 | 70 | B-2 | 30 | C-1 | 5 | Li•TFSI | 10 |
| Example 4 | AM-130G | 70 | B-2 | 30 | C-1 | 5 | Li•TFSI | 10 |
| Example 5 | A-3 | 90 | A-1000PER | 10 | C-1 | 5 | Li•TFSI | 10 |
| Example 6 | MEMA-4000 | 90 | A-1000PER | 10 | C-1 | 5 | Li•TFSI | 10 |
| Example 7 | A-4 | 90 | A-1000PER | 10 | C-1 | 5 | Li•TFSI | 10 |
| Example 8 | A-5 | 90 | A-1000PER | 10 | C-1 | 5 | Li•TFSI | 10 |
| Example 9 | A-6 | 90 | A-1000PER | 10 | C-1 | 5 | Li•TFSI | 10 |
| Example 10 | A-7 | 90 | A-1000PER | 10 | C-1 | 5 | Li•TFSI | 10 |
| Example 11 | A-4 | 95 | B-3 | 5 | C-4 | 2 | Li•TFSI | 20 |
| Example 12 | AM-230G | 95 | A-1000PER | 5 | C-2 | 2 | Li•TFSI | 20 |
| Example 13 | A-8 | 95 | A-1000PER | 5 | C-2 | 2 | Li•TFSI | 20 |
| Example 14 | A-5 | 95 | A-1000PER | 5 | C-2 | 2 | Li•TFSI | 20 |
| Example 15 | A-9 | 95 | A-1000PER | 5 | C-2 | 2 | Li•TFSI | 20 |
| Example 16 | A-5 | 95 | B-4 | 5 | C-4 | 2 | Li•TFSI | 20 |
| Example 17 | A-5 | 95 | B-5 | 5 | C-4 | 2 | Li•TFSI | 20 |
| Example 18 | A-5 | 95 | B-6 | 5 | C-4 | 2 | Li•TFSI | 20 |
| Example 19 | A-5 | 95 | B-3 | 5 | C-4 | 2 | Li•TFSI | 20 |
| Example 20 | A-5 | 95 | B-7 | 5 | C-4 | 2 | Li•TFSI | 20 |
| Example 21 | A-5 | 95 | A-1000 | 5 | C-4 | 2 | Li•TFSI | 20 |

(continued)

| | Polyether mono(meth) acrylate | | Polyether di(meth) acrylate or tri(meth) acrylate | | Reactive ion | | Supporting electrolyte | |
|---|---|---|---|---|---|---|---|---|
| | No. | parts by mass | No. | parts by mass | No. | parts by mass | No. | parts by mass |
| Example 22 | A-5 | 95 | B-8 | 5 | C-4 | 2 | Li•TFSI | 20 |
| Example 23 | AM-90G | 98 | A-400 | 2 | C-6 | 10 | Li•FSI | 10 |
| Example 24 | AM-130G | 98 | A-600 | 2 | C-6 | 10 | Li•FSI | 10 |
| Example 25 | A-5 | 98 | A-1000 | 2 | C-6 | 10 | Li•FSI | 10 |
| Example 26 | M-450G | 98 | PEGDA-4000 | 2 | C-6 | 10 | Li•FSI | 10 |
| Example 27 | A-10 | 70 | B-9 | 30 | C-1 | 1 | Li•FSI | 10 |
| Example 28 | A-10 | 70 | B-9 | 30 | C-3 | 1 | Li•FSI | 10 |
| Example 29 | A-10 | 70 | B-9 | 30 | C-5 | 1 | Li•FSI | 10 |
| Example 30 | A-10 | 70 | B-9 | 30 | C-7 | 1 | Li•FSI | 10 |
| Example 31 | A-10 | 70 | B-9 | 30 | C-8 | 1 | Li•FSI | 10 |
| Example 32 | A-10 | 70 | B-9 | 30 | C-9 | 1 | Li•BF4 | 10 |
| Example 33 | A-11 | 98 | 9G | 2 | C-3 | 15 | Li•PF6 | 10 |
| Example 34 | A-9 | 98 | A-GLY-20E | 2 | C-3 | 15 | Li•N(CN)2 | 10 |

The structures of the materials used when polymerized are as follows.

M-230G (methoxypolyethylene glycol methacrylate; in formula (1-1), $R^1$: methyl group, $R^2$: ethylene group $-(CH_2)_2-$, $R^3$: methyl group, m1: 23, n1: 0)
AM-130G (methoxypolyethylene glycol #600 acrylate; in formula (1-1), $R^1$: hydrogen atom, $R^2$: ethylene group, $R^3$: methyl group, m1: 13, n1: 0)
AM-230G (methoxypolyethylene glycol #1000 acrylate; in formula (1-1), $R^1$: hydrogen atom, $R^2$: ethylene group, $R^3$: methyl group, m1: 23, n1: 0)
AM-90G (methoxypolyethylene glycol #400 acrylate; in formula (1-1), $R^1$: hydrogen atom, $R^2$: ethylene group, $R^3$: methyl group, m1: 9, n1: 0)
M-450G (methoxypolyethylene glycol methacrylate; in formula (1-1), $R^1$: methyl group, $R^2$: ethylene group, $R^3$: methyl group, m1: 45, n1: 0)
A-1000PER (in formula (2-1), $R^4$: hydrogen atom, $R^5$: ethylene group or propylene group, $R^6$: ethylene group or propylene group, m2: 17, n2: 4)
A-1000 (polyethylene glycol #1000 diacrylate; in formula (2-1), $R^4$: hydrogen atom, $R^5$: ethylene group, $R^6$: ethylene group, m2: 23, n2: 0)
A-400 (polyethylene glycol #400 diacrylate; in formula (2-1), $R^4$: hydrogen atom, $R^5$: ethylene group, $R^6$: ethylene group, m2: 9, n2: 0)
A-600 (polyethylene glycol #600 diacrylate; in formula (2-1), $R^4$: hydrogen atom, $R^5$: ethylene group, $R^6$: ethylene group, m2: 14, n2: 0)
A-GLY-20E (ethoxylated glycerin triacrylate; in formula (3-1), $R^7$: hydrogen atom, $R^8$: ethylene group, $R^9$: ethylene group, $R^{10}$: ethylene group, $R^{11}$: $-CH_2(CH-)CH_2-$, m3: 20 as the sum of formula (3-1), n3: 0)
9G: polyethylene glycol #400 dimethacrylate (in formula (2-1), $R^4$: methyl group, $R^5$: ethylene group, $R^6$: ethylene group, m2: 9, n2: 0)
14G: polyethylene glycol #600 dimethacrylate (in formula (2-1), $R^4$: methyl group, $R^5$: ethylene group, $R^6$: ethylene group, m2: 14, n2: 0)
All of the above are manufactured by Shin-Nakamura Chemical Co., Ltd.

MEMA-4000: (polyethylene glycol #4000 dimethacrylate (in formula (2-1), $R^4$: methyl group, $R^5$: ethylene group, $R^6$: ethylene group, m2: 90, n2: 0)), manufactured by Toho Chemical Co., Ltd.

PEGDA-4000: (polyethylene glycol diacrylate; in formula (2-1), $R^4$: hydrogen atom, $R^5$: ethylene group, $R^6$: ethylene group, m2: 90, n2: 0) manufactured by Techno Chemical Co., Ltd.
Li·FSI stands for lithium bis(fluorosulfonyl)imide.

2. Configuration using the polymer electrolyte of the present disclosure as positive electrode active material binder

[Example 35]

(Preparation of negative electrode)

A 20 mm × 20 mm, 60 μm thick lithium foil (manufactured by Honjo Metal Co., Ltd.) was laminated on a 20 mm × 30 mm, 20 μm thick copper foil, leaving a 10 mm non-laminated end on one side, and then pressing was performed to prepare a negative electrode. The total thickness of the negative electrode was 70 μm. A nickel-plated 5 mm wide copper tab was joined to the non-laminated end on one side of the negative electrode.

(Solid electrolyte)

A 20 mm × 20 mm, 0.18 mm thick sheet of LICGC (manufactured by Ohara Inc.) was used.

(Preparation of positive electrode)

A total of 100 parts by mass of lithium cobalt oxide (manufactured by Fujifilm Wako Pure Chemical Industries, Ltd.) was mixed with 18 parts by mass of the electrolyte solution (60% solids) from Example 1 as an active material binder, and 5 parts by mass of Denka Black Li-100 (manufactured by Denka Corporation) as a conductive auxiliary material, and 40 parts by mass of N-methylpyrrolidone was added and mixed and stirred. The resulting slurry was then coated onto a 15 mm × 25 mm, 20 μm thick rolled aluminum foil, leaving a 10 mm uncoated end on one side, and then dried at 100°C for 30 min. Then, curing was performed by irradiating the film surface with UV light using a high-pressure mercury UV irradiation device (product name: Handy 1000, manufactured by Mario Network Co., Ltd.) to an integrated light dose of 7000 mJ/cm$^2$. After curing, pressing was performed to obtain a positive electrode with a thickness of 80 μm. An aluminum tab with a width of 5 mm was joined to the non-coated end on one side of the positive electrode.

(Preparation of secondary battery using polymer electrolyte as positive electrode active material binder)

The positive electrode with the polymer electrolyte as an active material binder was vacuum dried at 80°C for 48 h. The polymer electrolyte film was then placed in an argon-substituted glove box (temperature 25°C, dew point -70°C) and laminated in the order of positive electrode/solid electrolyte/negative electrode. The laminate was sandwiched between aluminum laminate films and vacuum-packed to obtain a secondary battery using the polymer electrolyte of the present disclosure as the positive electrode active material binder according to Example 35.

[Examples 36-39]

The secondary batteries according to Examples 36-39 were prepared in the same manner as in Example 35, except that the electrolyte solution (polymer electrolyte) was changed as shown in Table 7. The evaluation results, such as rate characteristics, are shown in Table 7.

3. Configuration using the polymer electrolyte of the present disclosure as bulk electrolyte, positive electrode active material binder, and negative electrode active material binder

[Example 40]

(Preparation of negative electrode)

A total of 100 parts by mass of graphite powder (manufactured by Fujifilm Wako Pure Chemical Industries, Ltd.) was mixed with 20 parts by mass of the electrolyte solution of Example 1 (60% solids) as an active material binder and 5 parts by mass of Denka Black Li-100 (manufactured by Denka Co., Ltd.) as a conductive auxiliary material, and 80 parts by mass of N-methylpyrrolidone was added and mixed and stirred. The resulting slurry was then coated onto a 20 mm × 30 mm, 20 μm copper foil, leaving a 10 mm uncoated end on one side, and then dried at 100°C for 30 min. Then, curing was performed by irradiating the film surface with UV light using a high-pressure mercury UV irradiation device (product name:

Handy 1000, manufactured by Mario Network Co., Ltd.) to an integrated light dose of 8000 mJ/cm$^2$. After curing, pressing was performed to obtain a negative electrode with a thickness of 80 $\mu$m. Negative electrode active material non-coated parts that were not coated with the negative electrode active material on both sides were provided on both ends, and a 5 mm wide nickel-plated 5 mm wide copper current collecting tab was joined to one of the negative active material non-coated parts.

(Preparation of positive electrode)

A total of 100 parts by mass of lithium cobalt oxide (manufactured by Fujifilm Wako Pure Chemical Industries, Ltd.) was mixed with 18 parts by mass of the electrolyte solution (60% solids) from Example 1 as an active material binder, and 5 parts by mass of Denka Black Li-100 (manufactured by Denka Corporation) as a conductive auxiliary material, and 40 parts by mass of N-methylpyrrolidone was added and mixed and stirred. The resulting slurry was then coated onto a 20 $\mu$m thick rolled aluminum foil and dried at 60°C for 30 min. Then, curing was performed by irradiating the film surface with UV light using a high-pressure mercury UV irradiation device (product name: Handy 1000, manufactured by Mario Network Co., Ltd.) to an integrated light dose of 7000 mJ/cm$^2$. After curing, pressing was performed to obtain a positive electrode with a thickness of 80 $\mu$m. Positive electrode active material non-coated parts that were not coated with the positive electrode active material on both sides were provided on both ends, and a 5 mm wide aluminum current collecting tab was joined to one of the positive active material non-coated parts.

(Formation of a polymer electrolyte layer)

The electrolyte solution of Example 1 was coated on the obtained positive electrode using a bar coater, followed by air drying at 23°C for 10 min and then drying at 60°C for 30 min. Then, curing was performed by irradiating the film surface with UV light using a high-pressure mercury UV irradiation device (product name: Handy 1000, manufactured by Mario Network Co., Ltd.) to an integrated light dose of 5000 mJ/cm$^2$. The film thickness after curing was 60 $\mu$m.

(Preparation of secondary battery using polymer electrolyte as bulk electrolyte, positive electrode active material binder, and negative electrode active material binder)

The positive electrode coated with the polymer electrolyte and the negative electrode were vacuum-dried at 80°C for 48 h. The polymer electrolyte film was then placed in an argon-substituted glove box (temperature 25°C, dew point -70°C), and a polyimide sheet punched into a window frame was attached so as to cover the outer periphery portion of the positive electrode surface to form a short-circuit prevention layer. Next, the polymer electrolyte layer of the positive electrode coated with the polymer electrolyte was laminated so that it corresponded to the active material layer of the negative electrode. The laminate was sandwiched between aluminum laminate films and vacuum-packed to obtain a secondary battery according to Example 40 in which the polymer electrolyte of the present disclosure was used as the bulk electrolyte, positive electrode active material binder, and negative electrode active material binder.

[Examples 41 to 44]

Secondary batteries according to Examples 41 to 44 were fabricated in the same manner as in Example 40, except that the electrolyte solution (polymer electrolyte) was changed as shown in Table 7. The evaluation results of the rate characteristics and the like are shown in Table 7.

<Comparative Examples>

[Comparative Example 1]

The following materials were mixed and stirred as materials for the polymer electrolyte.

- Polyether monomethacrylate NK-Ester M-40G (manufactured by Shin-Nakamura Chemical Co., Ltd.): 70 parts by mass
- Polyether dimethacrylate 4G (manufactured by Shin-Nakamura Chemical Co., Ltd.): 30 parts by mass

Lithium bis(trifluoromethanesulfonyl)imide (manufactured by Kishida Chemical Co., Ltd.): 5.0 parts by mass
Initiator Omnirad 184 (manufactured by IGM RESINS B.V.): 2.0 parts by mass

Next, methyl ethyl ketone was added so that the total solids ratio was 60% by mass, and mixing was performed

with a motor stirrer to prepare an electrolyte solution.

The polymer electrolyte and secondary battery of Comparative Example 1 were produced in the same manner as in Example 1.

[Comparative Examples 2 to 6]

The polymer electrolytes and secondary batteries of Comparative Examples 2 to 6 were prepared in the same manner as in Example 1, except that the types and amounts of polyether mono(meth)acrylate, polyether di(meth)acrylate, ionic compound, and supporting electrolyte were changed as shown in Table 4.

The secondary batteries of Comparative Examples 1 to 6 were constructed using the polymer electrolyte as the bulk electrolyte. The evaluation results of the rate characteristics and the like are shown in Table 6.

[Table 4]

Table 4

| | Polyether mono(meth) acrylate | | Polyether di(meth) acrylate or tri(meth) acrylate | | Reactive ion | | Supporting electrolyte | |
|---|---|---|---|---|---|---|---|---|
| | No. | parts by mass | No. | parts by mass | No. | parts by mass | No. | parts by mass |
| Com parative example 1 | M-40G | 70 | 4G | 30 | - | - | Li•TFSI | 5 |
| Com parative example 2 | - | - | 4G | 100 | C-1 | 5 | Li•TFSI | 10 |
| Com parative example 3 | M-40G | 30 | 4G | 70 | C-1 | 5 | Li•TFSI | 10 |
| Com parative example 4 | AM-130G | 99 | A-600 | 1 | C-2 | 5 | Li•TFSI | 10 |
| Com parative example 5 | AM-90G | 100 | - | - | C-2 | 5 | Li•TFSI | 10 |
| Com parative example 6 | PA-500 | 70 | APG-400 | 30 | C-2 | 5 | Li•TFSI | 10 |

The structures of the materials used when polymerized are as follows.

M-40G: methoxytetraethylene glycol methacrylate (in formula (1-1), $R^1$: methyl group, $R^2$: ethylene group, $R^3$: methyl group, m1: 3, n1: 0)

4G: polyethylene glycol #200 dimethacrylate (in formula (2-1), $R^4$: methyl group, $R^5$: ethylene group, $R^6$: ethylene group, m2: 4, n2: 0)

APG-400: polypropylene glycol #400 diacrylate (in formula (2-1), $R^4$: hydrogen atom, $R^5$: propylene group, $R^6$: propylene group, m2: 0, n2: 7)

AM-90G, AM-130G, and A-600 are as described above.

All of the above are manufactured by Shin-Nakamura Chemical Co., Ltd.

PA-500: hydroxypolypropylene glycol monoacrylate (in formula (1-1), $R^1$: hydrogen atom, $R^2$: propylene group, $R^3$: hydroxyl group, m1: 0, n1: 5), manufactured by Toho Chemical Co., Ltd.

[Comparative Example 7]

A secondary battery according to Comparative Example 7 was prepared in the same manner as in Example 35, except that the positive electrode active material binder was 7 parts by mass of Kureha KH Polymer L#1120 (manufactured by Kureha Co., Ltd.).

[Comparative Examples 8 to 10]

Secondary batteries according to Comparative Examples 8 to 10 were prepared in the same manner as in Example 35, except that the polymer electrolyte used was changed as shown in Table 8.

The secondary batteries of Comparative Examples 7 to 10 were constructed using the polymer electrolytes as the positive electrode active material binder. The evaluation results of the rate characteristics and the like are shown in Table 8.

[Comparative Examples 11 to 14]

Secondary batteries according to Comparative Examples 11 to 14 were prepared in the same manner as in Example 40, except that the polymer electrolyte used was changed as shown in Table 8.

The secondary batteries according to Comparative Examples 11 to 14 were constructed using polymer electrolytes as the positive electrode active material binder, bulk electrolyte, and negative electrode active material binder. The evaluation results of rate characteristics and the like are shown in Table 8.

The obtained polymer electrolytes and secondary batteries according to Examples 2 to 44 and Comparative Examples 1 to 14 were evaluated in the same manner as in Example 1. The evaluation results are shown in Tables 5, 6, 7, and 8.

[Table 5]

Table 5

| | Volume swelling ratio (%) | Average number of the added moles | | | Ion conductivity (S/cm) | | Rate characteristic | | Impact resistance test number of short circuits that occurred in secondary battery | |
|---|---|---|---|---|---|---|---|---|---|---|
| | | Meo | Mpo | Mpo % | 25°C | 5°C | During charging | During discharging | 25°C | 60°C |
| Example 1 | 44 | 44 | 7 | 16 | $3.47\times10^{-6}$ | $5.24\times10^{-5}$ | 0.15C | 0.15C | 0/5 | 0/5 |
| Example 2 | 40 | 41 | 7 | 16 | $3.61\times10^{-5}$ | $6.30\times10^{-5}$ | 0.20C | 0.20C | 0/5 | 1/5 |
| Example 3 | 70 | 78 | 6 | 8 | $3.13\times10^{-5}$ | $5.11\times10^{-5}$ | 0.20C | 0.15C | 0/5 | 0/5 |
| Example 4 | 63 | 28 | 4 | 14 | $3.33\times10^{-5}$ | $5.69\times10^{-5}$ | 0.20C | 0.20C | 0/5 | 0/5 |
| Example 5 | 84 | 74 | 14 | 19 | $4.51\times10^{-5}$ | $6.67\times10^{-5}$ | 0.20C | 0.20C | 0/5 | 0/5 |
| Example 6 | 81 | 76 | 0 | 0 | $2.77\times10^{-5}$ | $3.76\times10^{-5}$ | 0.20C | 0.20C | 0/5 | 0/5 |
| Example 7 | 81 | 30 | 6 | 20 | $4.35\times10^{-4}$ | $9.52\times10^{-4}$ | 0.40C | 0.40C | 0/5 | 0/5 |
| Example 8 | 75 | 16 | 3 | 18 | $4.01\times10^{-4}$ | $1.37\times10^{-5}$ | 0.40C | 0.40C | 0/5 | 0/5 |
| Example 9 | 79 | 10 | 2 | 19 | $3.26\times10^{-5}$ | $6.25\times10^{-5}$ | 0.20C | 0.20C | 0/5 | 0/5 |
| Example 10 | 72 | 7 | 1 | 17 | $2.72\times10^{-5}$ | $6.03\times10^{-5}$ | 0.20C | 0.20C | 0/5 | 0/5 |
| Example 11 | 107 | 34 | 6 | 19 | $6.80\times10^{-4}$ | $3.99\times10^{-5}$ | 0.50C | 0.50C | 0/5 | 0/5 |

(continued)

| | Volume swelling ratio (%) | Average number of the added moles | | | Ion conductivity (S/cm) | | Rate characteristic | | Impact resistance test number of short circuits that occurred in secondary battery | |
|---|---|---|---|---|---|---|---|---|---|---|
| | | Meo | Mpo | Mpo % | 25°C | 5°C | During charging | During discharging | 25°C | 60°C |
| Example 12 | 98 | 21 | 0 | 1 | $2.58\times10^{-5}$ | $5.66\times10^{-5}$ | 0.20C | 0.20C | 0/5 | 0/5 |
| Example 13 | 90 | 18 | 2 | 11 | $3.00\times10^{-4}$ | $1.68\times10^{-5}$ | 0.40C | 0.40C | 0/5 | 0/5 |
| Example 14 | 90 | 16 | 3 | 18 | $3.94\times10^{-4}$ | $9.79\times10^{-4}$ | 0.40C | 0.40C | 0/5 | 0/5 |
| Example 15 | 102 | 11 | 7 | 68 | $3.56\times10^{-5}$ | $6.34\times10^{-5}$ | 0.20C | 0.20C | 0/5 | 0/5 |
| Example 16 | 93 | 16 | 3 | 18 | $6.11\times10^{-5}$ | $5.87\times10^{-5}$ | 0.20C | 0.25C | 0/5 | 0/5 |
| Example 17 | 91 | 16 | 3 | 17 | $3.28\times10^{-5}$ | $6.77\times10^{-5}$ | 0.25C | 0.20C | 0/5 | 0/5 |
| Example 18 | 99 | 16 | 3 | 17 | $4.18\times10^{-4}$ | $1.04\times10^{-5}$ | 0.40C | 0.40C | 0/5 | 0/5 |
| Example 19 | 104 | 17 | 3 | 16 | $6.87\times10^{-4}$ | $3.66\times10^{-5}$ | 0.50C | 0.45C | 0/5 | 0/5 |
| Example 20 | 113 | 20 | 3 | 16 | $4.79\times10^{-5}$ | $5.81\times10^{-5}$ | 0.20C | 0.20C | 0/5 | 0/5 |
| Example 21 | 94 | 16 | 3 | 16 | $5.12\times10^{-5}$ | $4.00\times10^{-5}$ | 0.20C | 0.20C | 0/5 | 0/5 |
| Example 22 | 95 | 16 | 3 | 20 | $5.19\times10^{-5}$ | $5.91\times10^{-5}$ | 0.20C | 0.20C | 0/5 | 0/5 |
| Example 23 | 112 | 9 | 0 | 0 | $3.63\times10^{-5}$ | $5.04\times10^{-5}$ | 0.15C | 0.15C | 0/5 | 0/5 |
| Example 24 | 115 | 13 | 0 | 0 | $5.76\times10^{-5}$ | $6.15\times10^{-5}$ | 0.20C | 0.20C | 0/5 | 0/5 |
| Example 25 | 111 | 17 | 3 | 17 | $4.97\times10^{-5}$ | $5.49\times10^{-5}$ | 0.20C | 0.20C | 0/5 | 0/5 |
| Example 26 | 109 | 45 | 0 | 0 | $5.44\times10^{-5}$ | $6.72\times10^{-5}$ | 0.20C | 0.20C | 0/5 | 0/5 |
| Example 27 | 49 | 5 | 4 | 79 | $4.12\times10^{-5}$ | $6.77\times10^{-5}$ | 0.20C | 0.20C | 0/5 | 0/5 |
| Example 28 | 57 | 5 | 4 | 79 | $2.92\times10^{-5}$ | $5.56\times10^{-5}$ | 0.20C | 0.20C | 0/5 | 0/5 |
| Example 29 | 57 | 5 | 4 | 79 | $3.63\times10^{-5}$ | $5.75\times10^{-5}$ | 0.20C | 0.20C | 0/5 | 0/5 |
| Example 30 | 44 | 5 | 4 | 79 | $7.12\times10^{-5}$ | $5.99\times10^{-5}$ | 0.15C | 0.20C | 0/5 | 0/5 |

(continued)

| | Volume swelling ratio (%) | Average number of the added moles | | | Ion conductivity (S/cm) | | Rate characteristic | | Impact resistance test number of short circuits that occurred in secondary battery | |
|---|---|---|---|---|---|---|---|---|---|---|
| | | Meo | Mpo | Mpo % | 25°C | 5°C | During charging | During discharging | 25°C | 60°C |
| Example 31 | 59 | 5 | 4 | 79 | $2.57\times10^{-5}$ | $6.86\times10^{-5}$ | 0.20C | 0.15C | 0/5 | 0/5 |
| Example 32 | 56 | 5 | 4 | 79 | $6.93\times10^{-5}$ | $3.91\times10^{-5}$ | 0.20C | 0.20C | 0/5 | 0/5 |
| Example 33 | 116 | 4 | 3 | 72 | $4.55\times10^{-6}$ | $6.70\times10^{-5}$ | 0.15C | 0.15C | 0/5 | 1/5 |
| Example 34 | 110 | 11 | 8 | 72 | $2.73\times10^{-5}$ | $6.40\times10^{-5}$ | 0.15C | 0.20C | 0/5 | 1/5 |

In Tables 5 and 6, Mpo% is the ratio of the average number of the added moles Mpo to the average number of the added moles Meo.

[Table 6]

Table 6

| | Volume swelling ratio (%) | Average number of the added moles | | | Ion conductivity (S/cm) | | Rate characteristic | | Impact resistance test, number of short circuits that occurred in secondary battery | |
|---|---|---|---|---|---|---|---|---|---|---|
| | | Meo | Mpo | Mpo % | 25°C | 5°C | During charging | During discharging | 25°C | 60°C |
| Comparative Example 1 | 58 | 3 | 0 | 0 | $6.82\times10^{-7}$ | $7.86\times10^{-5}$ | 0.05C > | - | 0/5 | 0/5 |
| Comparative Example 2 | 30 | 3 | 0 | 0 | $8.17\times10^{-7}$ | $6.60\times10^{-5}$ | 0.05C > | - | 0/5 | 0/5 |
| Comparative Example 3 | 33 | 3 | 0 | 0 | $6.54\times10^{-7}$ | $6.25\times10^{-5}$ | 0.05C | 0.05C | 0/5 | 0/5 |
| Comparative Example 4 | 143 | 13 | 0 | 0 | $4.64\times10^{-5}$ | $9.41\times10^{-4}$ | 0.20C | 0.20C | 0/5 | 4/5 |
| Comparative Example 5 | - (dissolution) | 9 | 0 | 0 | $3.15\times10^{-5}$ | $2.03\times10^{-5}$ | 0.20C | 0.20C | 0/5 | 5/5 |
| Comparative Example 6 | 63 | 0 | 6 | - | $1.83\times10^{-6}$ | $8.93\times10^{-7}$ | 0.05C > | - | 0/5 | 0/5 |

The polymer electrolytes according to Examples 1 to 34 have the structure of formula (1), at least one of the

structures of formulas (2) and (3), as well as the structure of formula (4) in the polymer structure and have a volume swelling ratio of 40% to 120%. As a result, these polymer electrolytes show high ionic conductivity at both 25°C and 5°C. In addition, secondary batteries using the polymer electrolytes according to Examples 1 to 34 as bulk electrolytes have both high rate characteristics and high impact resistance at high temperatures.

Furthermore, Examples 7, 8, 11, 13, 14, 18, and 19, in which the mass ratio A : B of the content A of the structure of formula (1) to the content B of the structure of formula (2) in the polymer structure was 70 : 30 to 98 : 2, m1 + n1 in formula (1-1) was 14 to 58, and m2 + n2 in formula (2-1) was 14 to 58, showed particularly high ionic conductivity and the rate characteristics of the secondary batteries were also good.

Meanwhile, the polymer electrolytes of Comparative Example 1, which did not have the structure of formula (4) in the polymer structure, Comparative Examples 2 and 6, which did not have the structure of formula (1), and Comparative Example 3, which had a volume swelling ratio of less than 40%, showed low ionic conductivity and very poor rate characteristics of the secondary batteries.

Furthermore, the secondary batteries using the polymer electrolytes of Comparative Examples 4 and 5, which had a volume swelling ratio of more than 120% or did not have three-dimensional crosslinks, showed a significant decrease in impact resistance at high temperatures.

[Table 7]

Table 7

| | Polymer electrolyte | Usage location of polymer electrolyte | Rate characteristic | | Impact resistance test, number of short circuits that occurred in secondary battery | |
|---|---|---|---|---|---|---|
| | | | During charging | During discharging | 25°C | 60°C |
| Example 35 | Same as in Example 1 | Positive electrode active material binder | 0.20C | 0.20C | 0/5 | 0/5 |
| Example 36 | Same as in Example 7 | | 0.20C | 0.20C | 0/5 | 0/5 |
| Example 37 | Same as in Example 11 | | 0.50C | 0.45C | 0/5 | 0/5 |
| Example 38 | Same as in Example 14 | | 0.20C | 0.20C | 0/5 | 0/5 |
| Example 39 | Same as in Example 19 | | 0.50C | 0.50C | 0/5 | 0/5 |

(continued)

| | Polymer electrolyte | Usage location of polymer electrolyte | Rate characteristic | | Impact resistance test, number of short circuits that occurred in secondary battery | |
|---|---|---|---|---|---|---|
| | | | During charging | During discharging | 25°C | 60°C |
| Example 40 | Same as in Example 1 | Bulk electrolyte, Positive electrode active material binder, Negative electrode active material binder | 0.20C | 0.20C | 0/5 | 0/5 |
| Example 41 | Same as in Example 7 | | 0.20C | 0.20C | 0/5 | 0/5 |
| Example 42 | Same as in Example 11 | | 0.55C | 0.55C | 0/5 | 0/5 |
| Example 43 | Same as in Example 14 | | 0.20C | 0.15C | 0/5 | 0/5 |
| Example 44 | Same as in Example 19 | | 0.55C | 0.45C | 0/5 | 0/5 |

[Table 8]

Table 8

| | Polymer electrolyte | Usage location of polymer electrolyte | Rate characteristic | | Impact resistance test, number of short circuits that occurred in secondary battery | |
|---|---|---|---|---|---|---|
| | | | During charging | During discharging | 25°C | 60°C |
| Comparative Example 7 | (KH Polymer L#1120) | Positive electrode active material binder | 0.05C > | - | 0/5 | 0/5 |
| Comparative Example 8 | Same as in Comparative Example 1 | | 0.05C | 0.05C | 0/5 | 0/5 |
| Comparative Example 9 | Same as in Comparative Example 2 | | 0.05C | 0.05C | 0/5 | 0/5 |
| Comparative Example 10 | Same as in Comparative Example 6 | | 0.05C | 0.05C | 0/5 | 0/5 |

(continued)

| | Polymer electrolyte | Usage location of polymer electrolyte | Rate characteristic | | Impact resistance test, number of short circuits that occurred in secondary battery | |
|---|---|---|---|---|---|---|
| | | | During charging | During discharging | 25°C | 60°C |
| Comparative Example 11 | Same as in Com parative Example 1 | Bulk electrolyte, Positive electrode active material binder, Negative electrode active material binder | 0.05C > | - | 0/5 | 0/5 |
| Comparative Example 12 | Same as in Com parative Example 3 | | 0.05C > | - | 0/5 | 0/5 |
| Comparative Example 13 | Same as in Com parative Example 4 | | 0.25C | 0.25C | 0/5 | 5/5 |
| Comparative Example 14 | Same as in Com parative Example 5 | | 0.20C | 0.20C | 0/5 | 5/5 |

The secondary batteries according to Examples 35 to 39, in which the polymer electrolyte of the present disclosure is used as the positive electrode active material binder, and the secondary batteries according to Examples 40 to 44, in which the polymer electrolyte is used as the positive electrode active material binder, bulk electrolyte, and negative electrode active material binder, have high rate characteristics and high impact resistance at high temperatures, similar to the case of using the polymer electrolyte as a bulk electrolyte.

Meanwhile, the rate characteristics of the secondary batteries according to Comparative Examples 8 and 11, which do not have the structure of formula (4) in the polymer structure, Comparative Examples 9 and 10, which do not have the structure of formula (1), and Comparative Example 12, which has a volume swelling ratio of less than 40%, were poor. In addition, the secondary batteries according to Comparative Examples 13 and 14, which have a volume swelling ratio of more than 120% or do not have three-dimensional crosslinks, showed a significant decrease in impact resistance at high temperatures.

The present disclosure is not limited to the above-described embodiments, and various modifications and variations are possible without departing from the spirit and scope of the disclosure. Therefore, the following claims are appended to publicly disclose the scope of the disclosure.

This application claims priority based on Japanese Patent Application No. 2022-207165, filed on December 23, 2022, the entire contents of which are incorporated herein by reference.

## Claims

**1.** A polymer electrolyte, comprising a polymer having:

a structure represented by a formula (1) below;
at least one structure selected from the group consisting of a structure represented by a formula (2) below and a structure represented by a formula (3) below; and
a structure represented by a formula (4) below,
the polymer electrolyte further comprising a lithium salt, and
the polymer electrolyte having a volume swelling ratio of 40% to 120%, as measured by a methyl ethyl ketone immersion method:

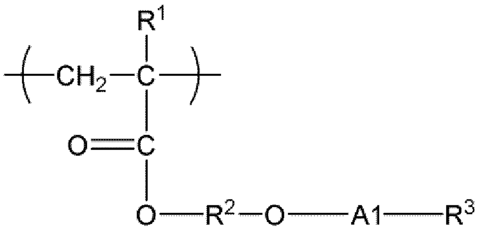

(1)

(2)

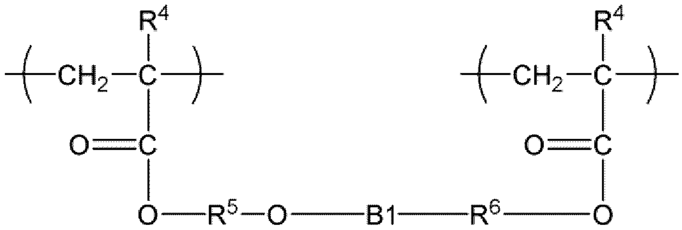

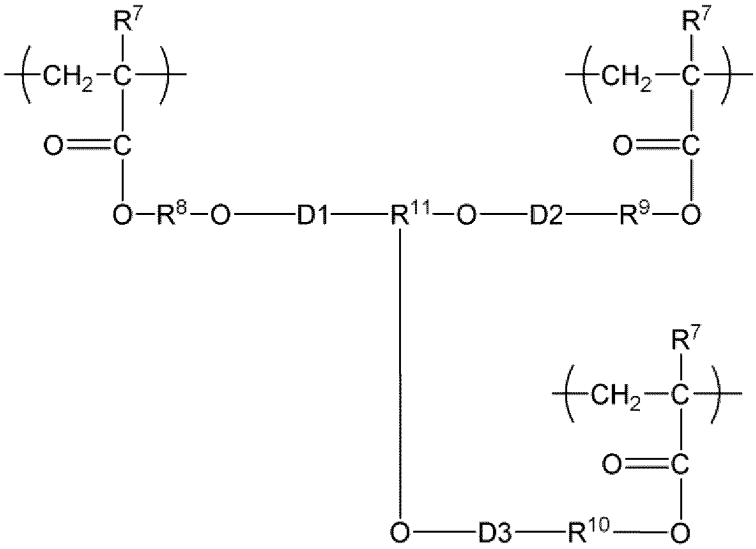

(3)

(In formula (1), $R^1$ represents a hydrogen atom or a methyl group. $R^2$ represents a linear or branched alkylene group having 1 to 6 carbon atoms. $R^3$ represents an alkyl group having 1 to 6 carbon atoms.
In formula (2), $R^4$ each independently represents a hydrogen atom or a methyl group. $R^5$ and $R^6$ each independently represents a linear or branched alkylene group having 1 to 6 carbon atoms.
In formula (3), $R^7$ each independently represents a hydrogen atom or a methyl group. $R^8$, $R^9$, and $R^{10}$ each independently represents a linear or branched alkylene group having 1 to 6 carbon atoms. $R^{11}$ represents a trivalent organic group having 1 to 6 carbon atoms.
A1, B1, D1, D2 and D3 in formulas (1) to (3) are each independently a linking group having at least an ethylene oxide structure represented by $(-CH_2CH_2-O-)$).

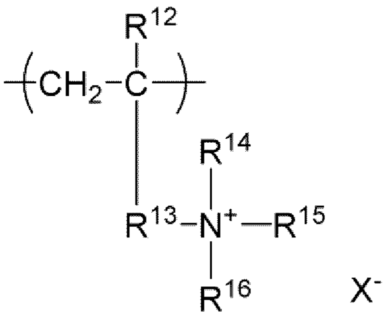

(4)

(In formula (4), $R^{12}$ represents a hydrogen atom or a methyl group. $R^{13}$ represents a divalent linking group. $R^{14}$, $R^{15}$, and $R^{16}$ each independently represents an alkyl group having 1 to 8 carbon atoms. $X^-$ represents an anion.).

2. The polymer electrolyte according to claim 1, wherein an average number Meo of added moles of the ethylene oxide structure per mole of (meth)acryloyl residue in the polymer is at least 2.5 moles.

3. The polymer electrolyte according to claim 1 or 2, wherein A1, B1, D1, D2 and D3 each independently further has a propylene oxide structure represented by ($-CH_2CH(CH_3)-O-$).

4. The polymer electrolyte according to claim 3, wherein an average number Mpo of the added moles of the propylene oxide structure per mole of (meth)acryloyl residue in the polymer is 5% to 25% of the average number Meo of the added moles of the ethylene oxide structure per mole of (meth)acryloyl residue in the polymer.

5. The polymer electrolyte according to any one of claims 1 to 4, wherein where a content based on mass of the structure represented by the formula (1) in the polymer contained in the polymer electrolyte is denoted by A and a total content based on mass of the structure represented by the formula (2) and the structure represented by the formula (3) is denoted by B, a mass ratio A:B is 70:30 to 98:2.

6. The polymer electrolyte according to any one of claims 1 to 5, wherein

the structure represented by the formula (1) is a structure represented by a formula (1-1) below,
the structure represented by the formula (2) is a structure represented by a formula (2-1) below, and
the structure represented by the formula (3) is a structure represented by formula (3-1) below:

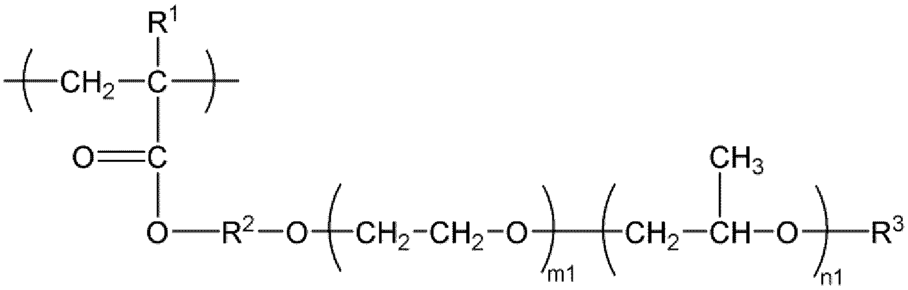

(1-1)

(In formula (1-1), $R^1$ represents a hydrogen atom or a methyl group. $R^2$ represents a linear or branched alkylene group having 1 to 6 carbon atoms. $R^3$ represents an alkyl group having 1 to 6 carbon atoms. m1 and n1 are average numbers of added moles, m1 is an integer of at least 1, and n1 is an integer of at least 0. Arrangement of an ethylene oxide structure represented by ($-CH_2-CH_2-O-$) and a propylene oxide structure represented by ($-CH_2-CH(CH_3)-O-$) may be a block copolymer or a random copolymer.),

(2-1)

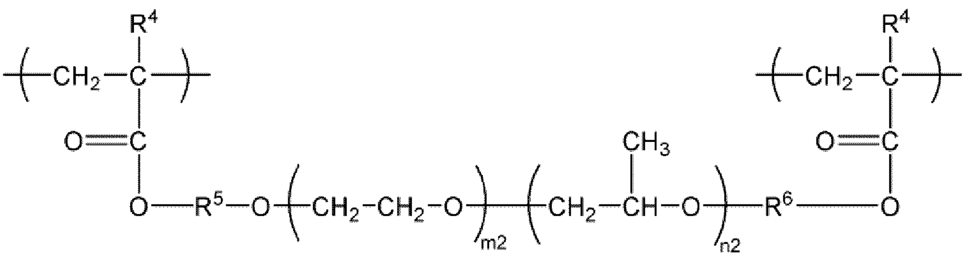

(In formula (2-1), $R^4$ each independently represents a hydrogen atom or a methyl group. $R^5$ and $R^6$ each independently represents a linear or branched alkylene group having 1 to 6 carbon atoms.
m2 and n2 are average numbers of added moles, m2 represents an integer of at least 1, and n2 represents an integer of at least 0. Arrangement of an ethylene oxide structure represented by ($-CH_2-CH_2-O-$) and a propylene oxide structure represented by ($-CH_2-CH(CH_3)-O-$) may be a block copolymer or a random copolymer. A chain sandwiched between two -COO- may further include a diol structure having 1 to 6 carbon atoms.),

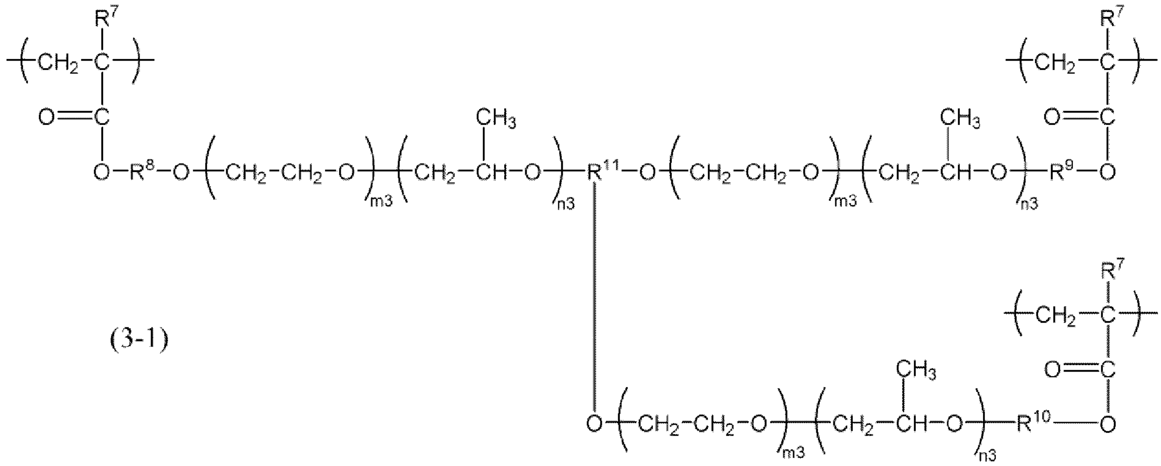

(3-1)

(In formula (3-1), $R^7$ each independently represents a hydrogen atom or a methyl group. $R^8$, $R^9$, and $R^{10}$ each independently represents a straight or branched alkylene group having 1 to 6 carbon atoms. $R^{11}$ represents a trivalent organic group having 1 to 6 carbon atoms. m3 and n3 are average numbers of added moles, m3 each independently represents an integer of at least 1, and n3 each independently represents an integer of at least 0. Arrangement of an ethylene oxide structure represented by ($-CH_2-CH_2-O-$) and a propylene oxide structure represented by ($-CH_2-CH(CH_3)-O-$) may be a block copolymer or a random copolymer. A chain sandwiched between -COO- and $R^{11}$ may further include a diol structure having 1 to 6 carbon atoms.).

**7.** The polymer electrolyte according to claim 6, wherein

m1 + n1 in the formula (1-1) is 14 to 58, and
m2 + n2 in formula (2-1) and/or m3 + n3 in formula (3-1) is 14 to 58.

**8.** The polymer electrolyte according to claim 6 or 7, wherein

m1:n1 in the formula (1-1) is 80:20 to 95:5, and
m2:n2 in the formula (2-1) and/or m3:n3 in the formula (3-1) is 80:20 to 95:5.

**9.** The polymer electrolyte according to any one of claims 1 to 8, wherein the polymer electrolyte is a dry polymer electrolyte.

**10.** A secondary battery comprising a positive electrode, a bulk electrolyte, and a negative electrode, wherein at least one selected from the group consisting of the positive electrode, the bulk electrolyte, and the negative electrode includes the polymer electrolyte according to any one of claims 1 to 9.

**11.** A secondary battery comprising a positive electrode, a bulk electrolyte, and a negative electrode, wherein the secondary battery satisfies at least any one of (i) to (iii) below:

(i) the positive electrode has a positive electrode active material and a positive electrode active material binder that fixes the positive electrode active material, and the positive electrode active material binder is the polymer electrolyte according to any one of claims 1 to 9;
(ii) the bulk electrolyte is the polymer electrolyte according to any one of claims 1 to 9; and
(iii) the negative electrode has a negative electrode active material and a negative electrode active material binder that fixes the negative electrode active material, and the negative electrode active material binder is the polymer electrolyte according to any one of claims 1 to 9.

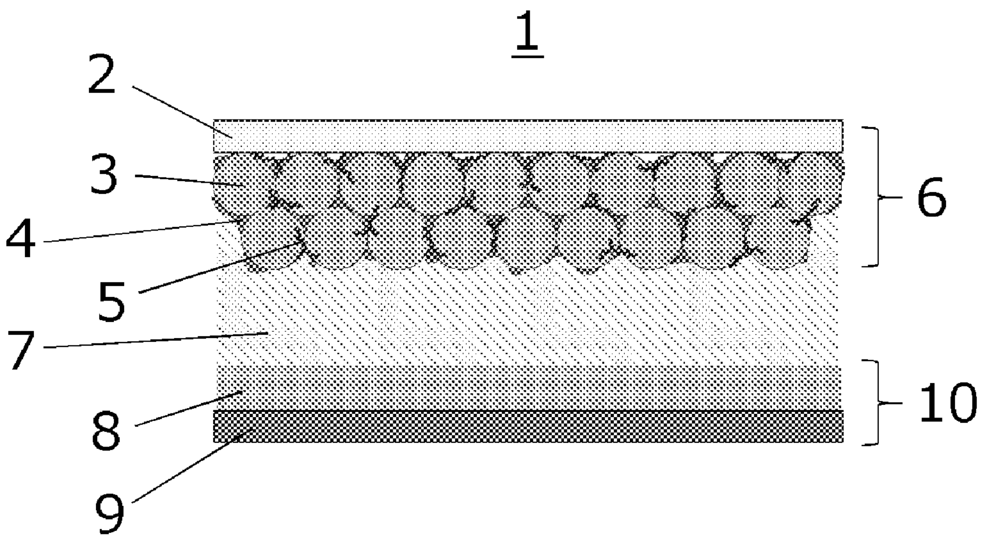


Fig. 1

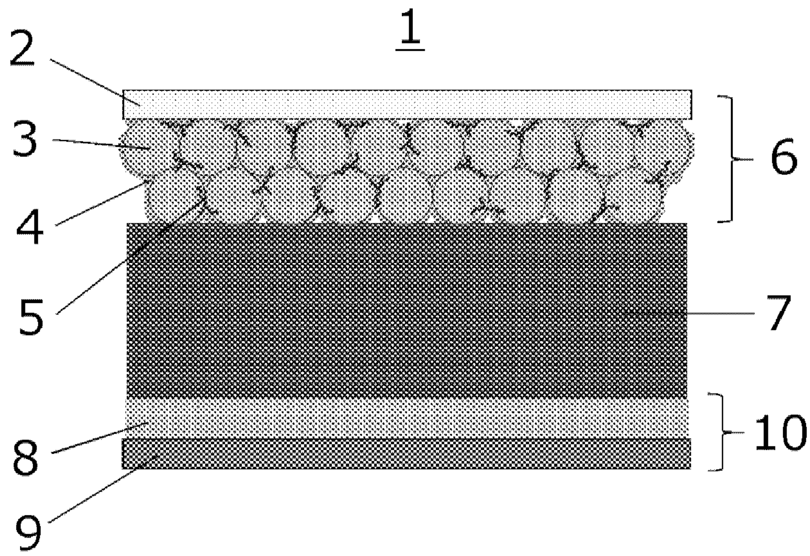


Fig. 2

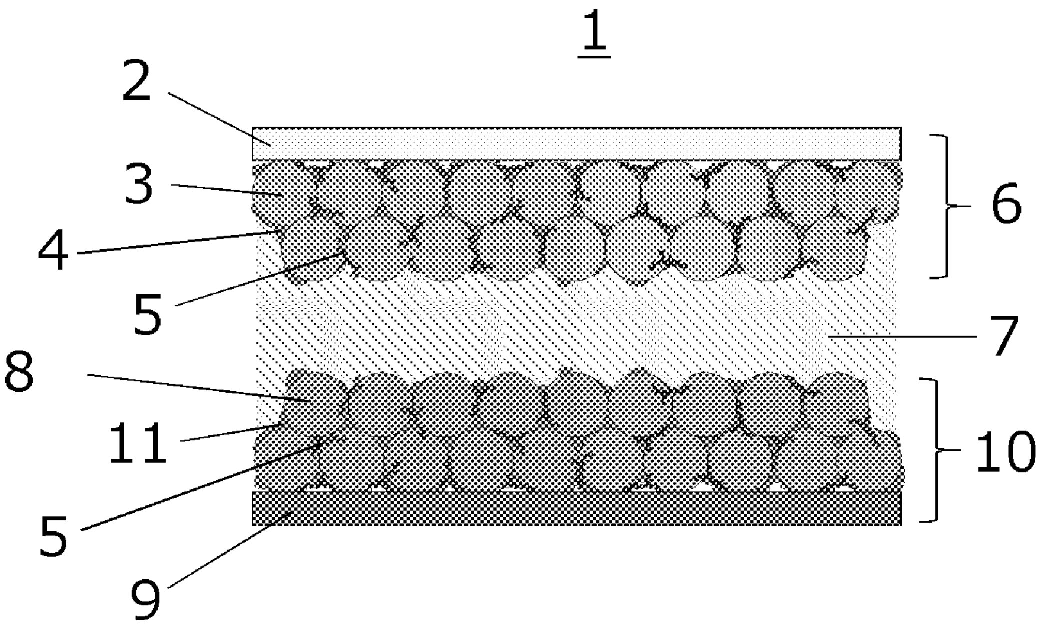


Fig. 3

**INTERNATIONAL SEARCH REPORT**

International application No.
**PCT/JP2023/045932**

**A. CLASSIFICATION OF SUBJECT MATTER**

***H01B 1/06***(2006.01)i; ***H01M 4/62***(2006.01)i; ***H01M 10/052***(2010.01)i; ***H01M 10/0565***(2010.01)i
FI: H01B1/06 A; H01M10/0565; H01M4/62 Z; H01M10/052

According to International Patent Classification (IPC) or to both national classification and IPC

**B. FIELDS SEARCHED**

Minimum documentation searched (classification system followed by classification symbols)

H01B1/06; H01M4/62; H01M10/052; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-236156 A (FUJITSU LIMITED) 13 September 1996 (1996-09-13) paragraphs [0010]-[0024], fig. 1 | 1-11 |
| A | JP 2003-257491 A (SANYO CHEMICAL INDUSTRIES, LTD.) 12 September 2003 (2003-09-12) paragraphs [0003]-[0109] | 1-11 |
| A | JP 2007-280912 A (INSTITUTE OF NATIONAL COLLEGES OF TECHNOLOGY JAPAN) 25 October 2007 (2007-10-25) paragraphs [0013]-[0059], fig. 1, 2 | 1-11 |
| A | US 2022/0158234 A1 (HYUNDAI MOTOR COMPANY) 19 May 2022 (2022-05-19) paragraphs [0007]-[0103] | 1-11 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 March 2024** | **12 March 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2023/045932**

| Patent document cited in search report | Publication date (day/month/year) | Patent family member(s) | Publication date (day/month/year) |
|---|---|---|---|
| JP 8-236156 A | 13 September 1996 | (Family: none) | |
| JP 2003-257491 A | 12 September 2003 | (Family: none) | |
| JP 2007-280912 A | 25 October 2007 | (Family: none) | |
| US 2022/0158234 A1 | 19 May 2022 | KR 10-2022-0067043 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017090677 A
- WO 2004027789 A
- JP 2007280912 A
- JP 2022207165 A